# EUROPÄISCHE PATENTSCHRIFT

(11) **EP 0 507 147 B1**
(45) Veröffentlichungstag und Bekanntmachung des Hinweises auf die Patenterteilung: **25.02.1998**
(21) Anmeldenummer: 92104647.0
(22) Anmeldetag: 18.03.1992
(51) Int. Cl.: B23B 29/04, B23B 31/26

(54) **Schnittstelle**
Coupling
Accouplement

(30) Priorität: 03.04.1991 DE 4110720; 31.05.1991 DE 4117765; 26.09.1991 DE 4132019
(43) Veröffentlichungstag der Anmeldung: 07.10.1992
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dr.jur. Dipl.-Ing.

(56) Entgegenhaltungen:
- EP-A- 0 339 321
- EP-A- 0 391 262
- EP-A- 0 451 360
- DE-A- 3 813 670
- DE-A- 3 814 550

## Beschreibung

Die Erfindung betrifft eine Schnittstelle zwischen einem Werkzeugträger und einem den Werkzeugträger haltenden Spannschaft einer Werkzeugmaschine.

Mit Schnittstelle wird hier allgemein eine Verbindungsstelle zwischen einem Element eines Werkzeugsystems und einer Werkzeugmaschine aber auch die Verbindungsstelle zwischen einzelnen Elementen eines Werkzeugsystems angesprochen. Dabei werden hier unter Elementen des Werkzeugsystems außer Reduzier- und Verlängerungsstücken, Adaptern und Aufnahmeelementen jede Art von Werkzeugen verstanden, also Dreh-, Bohr-, Fräs- oder auch Spezialwerkzeuge. Auch können Werkstücksträger beliebiger Art eingesetzt werden.

Es ist bekannt, Elemente eines Werkzeugsystems mit Hilfe beliebiger Verbindungsstellen aneinanderzukoppeln. Dabei ist es wesentlich, daß nach einem Austausch eines Werkzeug- oder Werkstückträgers anschließend zuvor eingestellte Maße möglichst exakt wieder eingehalten werden. Darüber hinaus sollen an der Verbindungsstelle ausreichende Kopplungskräfte aufgebaut werden, damit ein sicherer Halt gewährleistet ist. Wichtig ist auch, daß die Schnittstelle so ausgebildet ist, daß alle beweglichen Teile im Spannschaft sind und nicht im Werkzeugträger. Dadurch wird die Wirtschaftlichkeit wesentlich erhöht, denn es werden jeweils für einen Spannschaft eine Vielzahl von Werkzeugträgern verwendet. Diesen Anforderungen werden bekannte Systeme nicht gerecht.

Aus der EP-A2 0 451 360, die als Stand der Technik gemäß Artikel 54 (3) EPÜ für die Vertragsstaaten GB, FR, IT, SE, LI/CH und ES gilt, ist eine Spannvorrichtung zum Einspannen eines Werkzeuges in einem Werkzeugträger bekannt. Dabei weisen Spannklauen an ihren beiden Enden Spannflächen auf, welche einerseits mit einer Konusfläche einer Werkzeugaufnahme sowie andererseits einer entgegengesetzt zu dieser gerichteten Konusfläche in einem Zentrieransatz eines einzuspannenden Werkzeugs zusammenwirken.

Es ist daher Aufgabe der Erfindung eine als Schnittstelle bezeichnete Verbindungsstelle zu schaffen, mit der sich auch nach einem Wechsel eines der eingespannten Elemente eine hohe Maßgenauigkeit erzielen läßt, wobei ein sicherer Halt der eingespannten Elemente gewährleistet ist.

Diese Aufgabe wird bei einer Schnittstelle zwischen einem Werkzeugträger und einem den Werkzeugträger haltenden Spannschaft einer Werkzeugmaschine mit Hilfe der in Anspruch 1 genannten Merkmale gelöst. Dadurch, daß die Spannelemente am Umfang des als Spannbolzen ausgebildeten Spannorgans in axialer Richtung frei beweglich angeordnet sind, wird eine besonders gleichmäßige Kraftverteilung bei der Verspannung der beiden miteinander zu verbindenden Teile erreicht. Dabei ist die Belastung der einzelnen Spannelemente aufgrund ihrer freien Beweglichkeit relativ gering. Insbesondere werden Einspannkräfte eines Spannelements nicht auf ein anderes übertragen. Bei einer Verlagerung des Spannorgans in Einspannrichtung werden die Spannelemente zwischen die zweite Spannfläche am Spannbolzen und die erste Spannfläche im Paßzapfen gepreßt, so daß die beiden Teile der Schnittstelle fest miteinander verkoppelt werden. Es wird dabei lediglich auf den Kopfbereich der Spannelemente eine Druckkraft ausgeübt, der Kraftfluß geht über den Spannbolzen und über den Kopfbereich der Spannelemente in den Spannschaft. Dadurch können die Spannelemente sehr dünnwandig angelegt werden, wodurch sie sich sehr feinfühlig und exakt anlegen. Die durch das Spannorgan aufgebrachten Spannkräfte werden durch die frei beweglichen Spannelemente besonders gleichmäßig verteilt, so daß eine exakte Einspannung gewährleistet ist.

Ein Ausführungsbeispiel der Schnittstelle wird bevorzugt, welches sich dadurch auszeichnet, daß die Spannelemente in Aufnahmetaschen untergebracht sind, die auf der Außenseite des Spannbolzens vorgesehen sind. Dabei bleiben die Spannelemente in, axialer Richtung gesehen, frei beweglich. Auf diese Weise läßt sich die Schnittstelle sehr kompakt aufbauen, andererseits werden Verspannungen der Schnittstelle aufgrund der freien Beweglichkeit der Spannelemente vermieden. Dadurch wird eine besonders gleichmäßige Festspannung des Werkzeugträgers in dem Spannschaft sichergestellt.

Bevorzugt wird überdies eine Ausführungsform der Schnittstelle, bei welcher die Aufnahmetaschen durch Führungen gebildet werden, die in axialer Richtung des Spannbolzens an dessen Umfangswandung befestigt sind, vorzugsweise in dort vorgesehenen Nuten untergebracht sind. Dabei ist der Abstand der Führungen zueinander, in Umfangsrichtung gemessen, auf die Breite der Spannelemente angepaßt. Derartige Aufnahmetaschen sind einfach und kostengünstig herstellbar. Sie gewähren eine freie axiale Beweglichkeit bei einer guten Führung der Spannelemente.

Bei einer weiteren bevorzugten Ausführungsform der Schnittstelle ragt mindestens eine der Führungen, die die Aufnahmetaschen begrenzt, in eine auf der Innenseite der den Spannbolzen aufnehmenden Ausnehmung vorgesehene Nut ein, so daß der Spannbolzen so festgelegt wird, daß er zwar -in axialer Richtung gesehen- hin- und her bewegbar ist, daß er aber an einer Rotation innerhalb des Spannschafts gehindert wird. Dieser Aufbau der Schnittstelle zeichnet sich dadurch aus, daß er sehr einfach und damit kostengünstig realisierbar ist.

Bevorzugt wird überdies eine Ausführungsform der Schnittstelle, die sich dadurch auszeichnet, daß der Spannbolzen mittels eines Winkelantriebs gegenüber dem Spannschaft in axialer Richtung verlagerbar ist. Durch einen derartigen Aufbau lassen sich besonders hohe Spannkräfte aufbringen, die dazu führen, daß auch nach einem Wechsel eines Werkzeugträgers eine hohe Maßgenauigkeit gewährleistet ist.

Besonders bevorzugt wird eine Ausführungsform der Schnittstelle, bei welcher der Winkelantrieb eine koaxial zum Spannbolzen angeordnete Gewindehülse, die mit einem Innengewinde versehen ist, sowie ein mit der Gewindehülse zusammenwirkendes drehbares Betätigungsorgan aufweist, welches mit einem ersten Zahnkranz versehen ist, und bei welcher der Spannbolzen auf seiner Außenseite zumindest einen Bereich aufweist, der mit einem Außengewinde versehen ist, welches mit dem Innengewinde der Gewindehülse in Eingriff bringbar ist. Mit Hilfe der Gewindehülse des Winkelantriebs können unmittelbar auf den Spannbolzen Kräfte ausgeübt werden, die der Einspannung des Werkzeugträgers im Spannschaft der Werkzeugmaschine dienen. Dabei lassen sich bei einfachem Aufbau hohe Einspannkräfte auf den Spannbolzen übertragen, so daß eine exakte Einspannung gewährleistet ist.

Weiter wird eine Ausführungsform der Schnittstelle bevorzugt, bei welcher die Gewindehülse mit einem mit dem ersten Zahnkranz zusammenwirkenden zweiten Zahnkranz versehen und drehbar ausgebildet ist, während der Spannbolzen innerhalb des Spannschafts so befestigt ist, daß er lediglich in axialer Richtung hin- und her verschiebbar ist. Dadurch, daß lediglich die Gewindehülse im Spannschaft der Werkzeugmaschine rotiert, treten relativ geringe Reibungskräfte auf, so daß die bei der Betätigung des Winkelantriebs aufgebrachten Kräfte verlustarm der Einspannung des Werkzeugträgers dienen.

Bei einer weiteren bevorzugten Ausführungsform der Schnittstelle ist der Winkelantrieb so ausgebildet, daß sein Betätigungsorgan als drehbare Hülse ausgebildet ist, deren Drehachse senkrecht auf der Drehachse der Gewindehülse steht und so angeordnet ist, daß der erste und der zweite Zahnkranz ineinandergreifen. Bei einer derartigen Anordnung der Elemente des Winkelantriebs ist die Herstellung der beiden Zahnkränze besonders einfach und damit preisgünstig durchführbar, wobei die bei der Betätigung des Winkelantriebs aufgebrachten Einspannkräfte verlustarm übertragen werden können.

Weiter wird eine Ausführungsform der Schnittstelle bevorzugt, die sich dadurch auszeichnet, daß ein mit den Spannelementen zusammenwirkendes Widerlager vorgesehen ist, welches -bei einer Bewegung des Spannbolzens in Einspannrichtung- die Spannelemente so hält, daß deren dem Widerlager gegenüberliegenden Enden der Spannelemente von der zweiten Spannfläche des Spannbolzens gegen die erste Spannfläche im Paßzapfen gepreßt und damit die beiden Teile der Schnittstellen miteinander fest zusammengekoppelt werden. Dieser Aufbau der Schnittstelle zeichnet sich durch besonders geringe Reibungsverluste aus, so daß die bei der Betätigung der Schnittstelle aufgebrachten Kräfte weitgehend der Einspannung der beiden Elemente dient. Dadurch, daß die Spannelemente unabhängig voneinander in axialer Richtung verlagerbar sind, werden Maßtoleranzen der Spannflächen ausgeglichen und gleichmäßige Spannkräfte aufgebaut. Da auf die Spannelemente keine Zugkräfte wirken, können diese besonders biegsam ausgeführt werden, so daß sie sich gleichmäßig anlegen.

Bevorzugt wird überdies ein Ausführungsbeispiel der Schnittstelle, bei welchem das Widerlager durch eine in axialer Richtung feststehende Schulter gebildet wird. Eine derartige Schnittstelle ist einfach aufgebaut und führt zu einer optimalen Aufnahme der von den Spannelementen ausgeübten Kräfte.

Bei einer weiteren bevorzugten Ausführungsform der Schnittstelle ist das Spannorgan von einem durchgehenden Längskanal durchzogen, der für die Durchleitung eines Kühl- und/oder Schmiermittels vorgesehen ist. Entsprechend sind auf der Außenseite des Spannorgans beziehungsweise Spannbolzens Dichtungsmittel vorgesehen, die dafür sorgen, daß das Kühl-/Schmiermittel ausschließlich durch den Längskanal verläuft und nicht an den Seiten des Spannbolzens austreten kann. Es ist also sichergestellt, daß auch bei der Verwendung der Schnittstelle Kühl- und Schmiermittel eingesetzt werden können.

Eine weitere Ausführungsform der Schnittstelle wird deshalb bevorzugt, weil das Spannorgan auf seiner Stirnseite so ausgebildet ist, daß es mit einem Anschlußstutzen, der von dem Werkzeugträger entspringt, zusammenwirken kann. Über diesen können Kühl-/Schmiermittel weitergeleitet werden. Auf diese Weise können die Kühl-/Schmiermittel ohne weiteres vom Spannschaft an den Werkzeugträger weitergeleitet werden, ohne daß die der Einspannung dienende axiale Bewegung des Spannbolzens behindert würde.

Darüber hinaus wird eine Ausführungsform der Schnittstelle bevorzugt, bei welcher der Anschlußstutzen mit einer Anschlagfläche versehen ist, gegen die der Spannbolzen verfahrbar ist. Wird also der Winkelantrieb nicht in der Richtung betrieben, die der Einspannung des Werkzeugträgers dient, sondern in umgekehrter Richtung, bewegt sich der Spannbolzen gegen diese Anschlagfläche und drückt damit den Werkzeugträger aus dem Spannschaft heraus. Das heißt also, die Schnittstelle zeichnet sich dadurch aus, daß eine einfache Lösung der beiden verbundenen Elemente möglich ist.

Bei einer weiterhin bevorzugten Ausführungsform der Schnittstelle ist die erste Spannfläche im Paßzapfen als umlaufende Schulter einer Ringnut ausgebildet. Damit ist der Paßzapfen einfach herstellbar und beim Zusammenspannen beider Elemente beliebig in das Gegenstück einsetzbar.

Des weiteren wird eine Ausführungsform der Schnittstelle bevorzugt, bei der die zweite Spannfläche am Spannschaft als umlaufende Fläche einer Ringschulter ausgebildet ist. Damit ist auch die zweite Spannfläche einfach herstellbar. Überdies können die Einspannkräfte unabhängig von der relativen Lage der Teile zueinander, also auch bei einer beliebigen Verdrehung der Teile gegeneinander, sicher aufgebaut werden.

Besonders bevorzugt wird überdies eine Ausführungsform der Schnittstelle, bei der die Spannflächen mit der Längs- oder Drehachse des Werkzeugträgers beziehungsweise Spannschafts einen Winkel von insbesondere ca. 45° einschließen. Auf diese Weise ergibt sich beim Verspannen der beiden Elemente miteinander eine Kräfteaufspaltung beim Zusammenwirken der Spannelemente mit den beiden Spannflächen: Eine Kraftkomponente wirkt dabei praktisch in axialer Richtung, so daß der Werkzeugträger und der Spannschaft der Werkzeugmaschine fest miteinander verbunden werden, wobei der Werkzeugträger quasi an den Spannschaft herangezogen wird und so eine sichere Anlage beider Teile aneinander gewährleistet ist. Damit ist eine vorgegebene Einstellung des Werkzeugträgers auch nach dessen Austausch noch gegeben, so daß sich eine Nachjustierung in den meisten Fällen vermeiden läßt.

Bevorzugt wird außerdem ein Ausführungsbeispiel einer Schnittstelle, die ein unmittelbar auf den Spannbolzen wirkendes Betätigungselement aufweist, welches diesen axial verlagert. Durch diese Ausgestaltung werden die bei der Verspannung der beiden der Schnittstelle zugeordneten Teile auftretenden Reibungskräfte auf ein Minimum reduziert. Dadurch lassen sich hohe Einspannkräfte mit relativ geringen, auf das Betätigungselement wirkenden Kräften bewirken. Dies führt zu einer hohen Haltbarkeit des Betätigungselements und einer langen Standzeit der Schnittstelle.

Besonders bevorzugt wird eine Ausführungsform der Schnittstelle, bei welcher das Betätigungselement als Exzenter ausgebildet ist, der im wesentlichen senkrecht auf der Mittel- beziehungsweise Drehachse des Spannbolzens steht. Ein derartiges Betätigungselement ist kostengünstig herstellbar und kann die erforderlichen Spannkräfte ohne weiteres erbringen.

Ein weiteres bevorzugtes Ausführungsbeispiel zeichnet sich dadurch aus, daß die Schnittstelle ein unmittelbar auf den Spannbolzen wirkendes Betätigungselement aufweist, welches diesen axial verlagert. Durch diesen Aufbau werden die bei der Verspannung der beiden der Schnittstelle zugeordneten Teile auftretenden Reibungskräfte auf ein Minimum reduziert. Somit lassen sich hohe Einspannkräfte mit relativ geringen, auf das Betätigungselement ausgeübten Kräften bewirken. Dies führt zu einer hohen Haltbarkeit des Betätigungselements und einer langen Standzeit der Schnittstelle.

Besonders bevorzugt wird eine Ausführungsform der Schnittstelle, bei welcher das Betätigungselement als Exzenter ausgebildet ist, der im wesentlichen senkrecht auf der Mittel- beziehungsweise Drehachse des Spannbolzens steht. Ein derartiges Betätigungselement ist kostengünstig herstellbar und kann die erforderlichen Spannkräfte ohne weiteres erbringen.

Weiter wird eine Ausführungsform der Schnittstelle bevorzugt, die sich dadurch auszeichnet, daß zwischen einem Exzenterbolzen des Exzenters und dem Spannbolzen ein in axialer Richtung innerhalb des Spannschachts verlagerbares Gleitstück vorgesehen ist, welches mit dem Exzenterbolzen zusammenwirkt, dessen Spannkräfte aufnimmt und an den Spannbolzen weiterleitet. Dadurch, daß das Gleitstück drehbar im Spannbolzen gelagert ist, werden die vom Exzenterbolzen aufgebrachten Spannkräfte besonders gut vom Exzenter auf den Spannbolzen übertragen, wobei punkt- beziehungsweise linienförmige Belastungen vermieden werden.

Bei einer weiteren bevorzugten Ausführungsform der Schnittstelle ist der Exzenterbolzen so ausgebildet, daß er einen um die Drehachse des Exzenters schwenkbaren Druckflächenbereich aufweist, dessen Radius auf den Radius einer konkaven Ausnehmung im Mantel des Gleitstücks abgestimmt ist, so daß die beiden genannten Radien im wesentlichen gleich groß sind. Durch diese Ausgestaltung ergibt sich eine auf einen relativ großen Bereich verteilte Flächenpressung, so daß punkt- beziehungsweise linienförmige Kräfte und damit ein hoher Verschleiß vermieden werden.

Schließlich wird eine Ausführungsform der Schnittstelle bevorzugt, bei welcher die Drehachse des Gleitstücks gegenüber der Längsachse des Spannbolzens verschoben ist, so daß sich beim Spannen ein Kniehebeleffekt ergibt, durch welchen eine Lösung des Exzenters nach dem Festspannen der der Schnittstelle zugeordneten Teile nur bei Überwindung eines zusätzlichen Lösemoments erfolgen kann. Eine unbeabsichtigte Lösung der Schnittstelle ist damit mit hoher Sicherheit zu vermeiden.

Weitere Ausgestaltungen der Erfindung ergeben sich aus den übrigen Unteransprüchen.

Die Erfindung wird im folgenden anhand der Zeichnung näher erläutert. Es zeigen:
- Figur 1: einen Längsschnitt durch eine Schnittstelle;
- Figur 2: einen Querschnitt durch einen in der Schnittstelle gemäß Figur 1 verwendeten Spannbolzen;
- Figur 3: einen schematischen Längsschnitt durch ein erstes Ausführungsbeispiel einer Schnittstelle in festgespanntem Zustand;
- Figur 4: einen schematischen Längsschnitt durch die in Figur 1 dargestellte Schnittstelle in entriegeltem Zustand;
- Figur 5: eine schematisierte Draufsicht auf die Schnittstelle gemäß Figur 1 mit einem Teilschnitt durch den den Exzenter aufnehmenden Wandungsbereich;
- Figur 6: einen schematischen Längsschnitt durch ein weiteres Ausführungsbeispiel einer Schnittstelle;
- Figuren 7, 8 und 9: einen Längsschnitt durch eine Schnittstelle während verschiedener Spannzustände;
- Figur 10: eine Draufsicht auf einen in den Figuren 7 bis 9 dargestellten Spannbolzen und
- Figur 11: einen Schnitt durch einen Spannbolzen gemäß Figur 10.

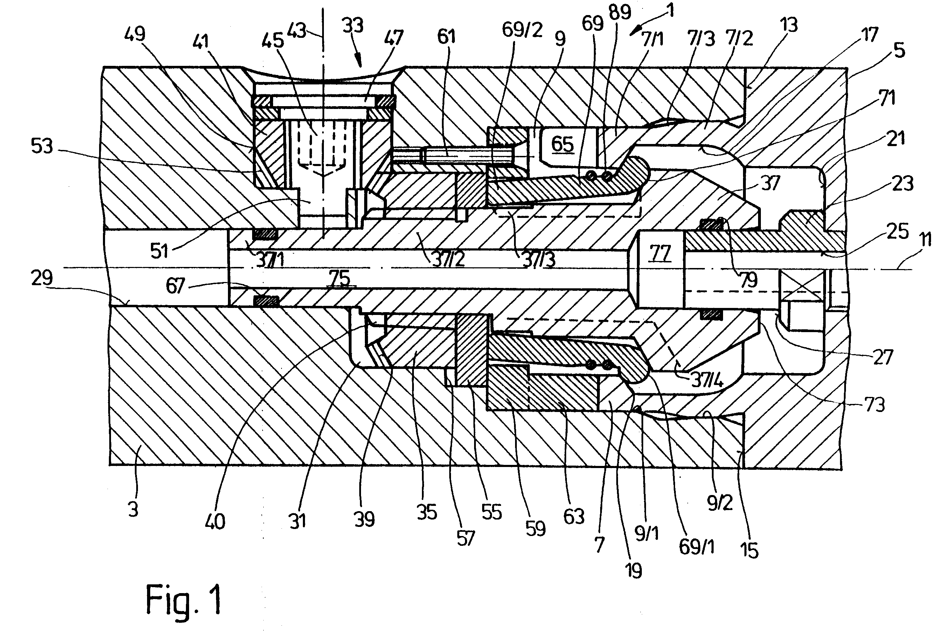

Bei dem Längsschnitt gemäß Figur 1 wurde die Darstellung auf den Kern der Schnittstelle beschränkt. Die Verbindung des Spannschaftes, in Figur 1 links, mit einer Werkzeugmaschine kann auf bekannte Weise durchgeführt werden. Die Ausgestaltung des Werkzeugträgers, in Figur 1 rechts, ist ebenfalls beliebig. Der Schaft des Werkzeugträgers wurde unmittelbar nach der Schnittstelle abgebrochen.

Es sei hier nochmals darauf verwiesen, daß die dargestellte Schnittstelle universell als Verbindungsstelle verwendbar ist, also auch als sogenannte Trennstelle zwischen einem Zwischenstück und einem Werkzeugträger.

An der Schnittstelle 1, die in Figur 1 geschnitten dargestellt ist, ist links ein abgebrochener Spannschaft 3 einer Werkzeugmaschine erkennbar und rechts ein abgebrochener Schaft eines Werkzeugträgers 5. Die beiden zu verbindenden Teile sind im Bereich der Schnittstelle kreiszylindrisch ausgebildet und haben praktisch gleichen Durchmesser.

Der Werkzeugträger 5 ist mit einem Paßzapfen 7 versehen, dessen Außendurchmesser so gewählt ist, daß er in eine Ausnehmung 9 im Stirnbereich des Spannschafts 3 eingesetzt werden kann. Der Paßzapfen 7 ist in seinem Wurzelbereich von einer senkrecht zur Längs- oder Drehachse 11 verlaufenden ersten Anlagefläche 13 versehen, die mit einer im Stirnbereich des Spannschafts 3 vorgesehenen zweiten Anlagefläche 15 zusammenwirkt.

Der Paßzapfen 7 ist mit einem ersten Bereich 7/1 und mit einem zweiten Bereich 7/2 versehen. Diese Bereiche unterscheiden sich durch ihren Außendurchmesser, wobei der vordere Außenbereich 7/1 einen kleineren Durchmesser aufweist, als der hintere näher an der ersten Anlagefläche 13 angeordnete Außenbereich 7/2 des Paßzapfens 7. Die beiden Bereiche sind über eine Rampe 7/3 miteinander verbunden.

Durch die Außenbereiche verschiedener Außendurchmesser ist das Einfügen des Paßzapfens 7 in die Ausnehmung 9 des Spannschafts 3 erleichtert. Die Ausnehmung ist entsprechend mit Bereichen verschiedener Innendurchmesser versehen, die in Figur 1 mit 9/1 und 9/2 bezeichnet sind.

Der Paßzapfen 7 ist hohl ausgebildet. Seine Wandung ist im Bereich der Stirnseite des Paßzapfens mit einer Ringnut 17 versehen, deren Wandung in einem großen Bereich im wesentlichen parallel zur Drehachse 11 verläuft. Im Bereich der Stirnseite geht die Ringnut 17 in eine erste Spannfläche 19 über, die gegenüber der Drehachse 11 unter einem Winkel verläuft. Der Winkel ist frei wählbar in einem Bereich zwischen etwa 90° bis 5°. Vorzugsweise wird ein Winkel von 60° bis 30° gewählt, insbesondere wird ein Winkel von ca. 45° bevorzugt.

Die erste Spannfläche 19 ist als durchgehende Ringschulter ausgebildet.

Am Grund 21 des hohlen Paßzapfens 7 ist ein Anschlußstutzen 23 mit einem zentralen Durchlaßkanal 25 vorgesehen, durch welchen ein Kühl- und/oder Schmiermittel geführt werden kann. Eine dem Spannschaft 3 zugewandte Stirnfläche 27 des Anschlußstutzens 23 dient als Anschlagfläche.

Der Anschlußstutzen 23 ist auf beliebige Weise an dem Schaft des Werkzeugträgers 5 befestigt, beispielsweise durch eine Verschraubung.

Auch der Spannschaft 3 ist mit einem durchgehenden Kanal 29, der hier konzentrisch zur Drehachse 11 angeordnet ist, versehen. Er dient ebenfalls der Durchleitung eines Kühl- und/oder Schmiermittels.

Die in die Stirnseite des Spannschafts eingebrachte Ausnehmung 9 weist einen Bereich 31 mit reduziertem Innendurchmesser auf. Hier ist ein erstes Element eines Winkelantriebs 33 eingebracht, nämlich eine Gewindehülse 35. Die Hülse ist so dimensioniert, daß ihr Außendurchmesser im wesentlichen dem Innendurchmesser des Bereichs 31 der Ausnehmung 9 entspricht. Ihr Innendurchmesser ist so gewählt, daß sie einen Spannzapfen 37 umgreift. Sie ist mit einem Innengewinde versehen, das mit einem in diesem Bereich des Spannzapfens 37 vorgesehenen Außengewinde kämmt. In ihrem der Stirnseite des Spannschafts 3 abgewandten Endbereich weist die Hülse einen ersten Zahnkranz 39 auf, der Teil einer Schrägverzahnung ist.

Das Gegenstück der Schrägverzahnung befindet sich auf dem zweiten Element des Winkelantriebs 33, nämlich an einem Betätigungsorgan 41, welches kreiszylindrisch ausgebildet und so angeordnet ist, daß dessen Drehachse 43 senkrecht zur Drehachse 11 verläuft. Das Betätigungsorgan 41 ist quasi als Madenschraube ausgebildet und weist auf seiner Stirnseite, die der äußeren Umfangsfläche des Spannschafts 3 zugewandt ist, einen Innensechskant 45 auf. Das Betätigungsorgan 41 ist auf geeignete Weise, beispielsweise durch eine Ringfeder 47 in einer Bohrung 49 im Spannschaft 3 festgelegt. Auf seiner der Drehachse 11 zugewandten Stirnseite kann das Betätigungsorgan 41 mit einem Zentrierzapfen 51 versehen sein, welcher der zusätzlichen Führung des Betätigungsorgans 41 dient.

Das Betätigungsorgan 41 ist auf seiner Unterseite mit einem zweiten Zahnkranz 53 versehen, der in Eingriff mit dem ersten Zahnkranz 39 tritt.

Durch eine Drehung des Betätigungsorgans 41 findet aufgrund der Zahnkränze 39 und 53 eine Drehung der Gewindehülse 35 statt. Diese ist daher innerhalb des Bereichs 31 der Ausnehmung 9 frei drehbar angeordnet. Eine Längsbewegung der Gewindehülse 35 wird einerseits durch das Betätigungsorgan 41 und andererseits durch ein Widerlager 55 verhindert, welches in einem geeigneten Ringnutbereich 57 in der Ausnehmung 9 des Spannschafts 3 angeordnet ist. Als Widerlager 55 können beispielsweise eine oder mehrere Distanzscheiben verwendet werden. Sie werden durch eine Mitnehmerscheibe 59 in der Gehäuseausnehmung 57 gegen eine axiale Verlagerung, also gegen eine Verschiebung in Richtung der Drehachse 11 gesichert.

Die vorzugsweise ringförmig ausgebildete Mitnehmerscheibe 59 ist durch geeignete Befestigungsmittel, beispielsweise durch eine oder mehrere Schrauben 61 am Spannschaft 3 befestigt. Dabei reichen die Schrauben durch die Mitnehmerscheibe 59 in den Grundkörper des Spannschafts 3 und wirken dort mit einem Gewinde zusammen. Die in der Figur 1 dargestellte Schraube kann an beliebiger Stelle im Umfangsbereich der Mitnehmerscheibe 59 angeordnet sein.

Die Mitnehmerscheibe 59 weist einen von der Scheibe entspringenden, axial zur Stirnfläche des Spannschafts 3 ragenden Vorsprung 63 auf, der in eine geeignete Ausnehmung 65 in der Stirnseite des Spannzapfens 7 eingreift. Die Mitnehmerscheibe kann einen oder mehrere derartiger Vorsprünge 63 aufweisen. Diese dienen dazu, Drehmomente vom Spannschaft 3 über den Spannzapfen 7 auf den Werkzeugträger zu übertragen.

Der als Spannorgan dienende Spannbolzen 37 weist mehrere Bereiche mit verschiedenen Außendurchmessern auf. In seinem linken Bereich 37/1 ist der Außendurchmesser des Spannbolzens so gewählt, daß dieser in den Durchgangskanal 29 im Spannschaft 3 einführbar ist. Es ist dort auch eine vorzugsweise als O-Ring ausgebildete Dichtungseinrichtung 67 vorgesehen, die einen Austritt des Kühl- oder Schmiermittels aus dem Durchgangskanal 29 verhindert. In einem zweiten Bereich 37/2 ist der Außendurchmesser des Spannbolzens 37 so gewählt, daß das dort vorgesehene Außengewinde 40 mit dem Innengewinde der Gewindehülse 35 kämmt. Der dritte Bereich 37/3 weist einen größeren Außendurchmesser auf. Er dient der Auflage von Spannelementen 69, die am Umfang des Spannbolzens 37 angeordnet sind. Ein noch größerer Außendurchmesser ist in dem sich anschließenden Bereich 37/4 vorgesehen. Im Übergangsbereich zwischen dem Bereich 37/3 und 37/4 wird eine zweite Spannfläche 71 gebildet, die quasi als Ringschulter umlaufend ausgebildet ist. Der Außenbereich 37/4 des Spannbolzens 37 verjüngt sich in Richtung der Stirnfläche 73 des Spannbolzens 37. Dabei dient die Verjüngung dazu, den hohen Paßzapfen 7 leichter über den Spannbolzen 37 zu schieben, während der Spannschaft 3 und der Werkzeugträger 5 zusammengesetzt werden.

Der Spannbolzen 37 ist mit einem koaxial zur Drehachse 11 angeordneten Durchgangskanal 75 für das Kühl- und/oder Schmiermittel versehen. Dieser Kanal weist einen aufgeweiteten Bereich 77 in der Nähe der Stirnfläche 73 auf. Der Innendurchmesser dieses aufgeweiteten Bereichs 77 ist an den Außendurchmesser des Anschlußstutzens 23 im Werkzeugträger 5 angepaßt. Der Anschlußstutzen ragt so weit in dem Spannbolzen 37 hinein, daß auch bei einer axialen Verlagerung des Spannbolzens immer eine sichere Abdichtung des Durchgangskanals gewährleistet ist. Auch in diesem Bereich ist ein Dichtungsorgan 79 vorgesehen.

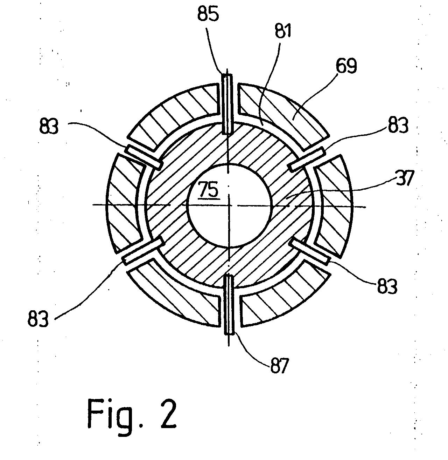

Figur 2 zeigt einen Querschnitt, durch den Spannzapfen 37 der in Figur 1 dargestellten Schnittstelle 1. Gleiche Teile sind mit gleichen Bezugszeichen versehen, so daß auf deren ausführliche Beschreibung hier verzichtet werden kann. Der Spannbolzen 37 ist bei dem hier dargestellten Ausführungsbeispiel mit sechs Spannelementen 69 umgeben. Die Außenflächen der Spannelemente sind kreisbogenförmig gewölbt. Es ist erkennbar, daß die Spannelemente in Aufnahmetaschen 81 angeordnet sind, die seitlich durch Führungselemente 83 begrenzt werden.

Wenn die sechs Spannelemente 69 in die zugehörigen Aufnahmetaschen 81 eingebracht sind, ergibt sich eine äußere Kreiskontur. An zwei Stellen wird die gedachte Umfangslinie der gesamten Anordnung durch zwei Führungselemente 85 und 87 überragt, die in entsprechende Ausnehmungen im Spannschaft 3 eingebracht sind. Bei dem hier dargestellten Ausführungsbeispiel greifen diese Führungselemente 85 und 87 in nicht dargestellte Nuten des Mitnehmerrings 59 und verhindern somit eine Drehbewegung des Spannbolzens 37 innerhalb des Spannschafts 3. Dabei wird eine Längsbewegung des Spannbolzens 37 in keiner Weise durch diese beiden Führungselemente 85 und 87 begrenzt oder behindert.

Bei der Darstellung gemäß Figur 2 ist der durchgehende Kanal 75 für das Kühl-/Schmiermittel deutlich erkennbar.

Im folgenden wird auf die Funktion der Schnittstelle näher eingegangen.

Zur Herstellung der fertigen, in Figur 1 dargestellten Verbindung wird der Werkzeugträger 5 mit dem Spannschaft 3 verbunden, indem der Paßzapfen 7 des Werkzeugträgers 5 in die Ausnehmung 9 in der Stirnseite 73 des Spannschafts 3 eingeführt wird. Dabei erleichtern die Bereiche 7/1 und 7/2 des Außenumfangs des Paßzapfens 7 das Einführen. Gleichzeitig wird der Paßzapfen durch den Spannbolzen 37 in der Ausnehmung 9 zentriert. Dabei wird die Einführung des Paßzapfens dadurch erleichtert, daß die Stirnseite 73 des Spannbolzens 37 über die zweite Ringfläche 15, die die Stirnfläche des Paßzapfens 3 bildet, hinausragt und von einer konisch verlaufenden Fläche umgeben ist.

Während des Einführens des Paßzapfens 7 in die Ausnehmung 9 befinden sich die Spannelemente 69 -anders als in Figur 1 dargestellt- in ihrer an die Außenfläche des Spannbolzens 37 angelegten Position. Dazu werden das Betätigungsorgan 41 und damit aufgrund des Zusammenspiels der Zahnkränze 53 und 39 die Gewindehülse 35 so lange gedreht, bis aufgrund der Zusammenwirkung des Innengewindes in der Gewindehülse 39 und des Außengewindes 40 im Bereich 37/2 des Spannbolzens 37 dieser ganz nach rechts bewegt wird. Dadurch kann sich der Kopfbereich 69/1 der Spannelemente 69 an den Außenumfang des Spannbolzens 37 anlegen. Dabei wirken elastische Rückstellorgane, beispielsweise Gummiringe 89, auf die Spannelemente 69 ein und drücken diese gegen die Umfangswandung des Spannbolzens 37.

Im angelegten Zustand der Spannelemente ist der Außendurchmesser des Spannbolzens im Bereich des Kopfbereichs 69/1 so klein, daß der Spannbolzen 37 mit dem Kopfbereich 69/1 der Spannelemente 69 in den Hohlraum in Paßzapfen 7 eingeführt werden kann.

Der Werkzeugträger 5 wird so in den Spannzapfen 3 eingeschoben, daß die radialen Führungsflächen 13 und 15 aneinanderliegen. Anschließend wird das Betätigungsorgan 41 beispielsweise mit einem geeigneten Steckschlüssel über den Innensechskant 45 verdreht und damit die Gewindehülse 35 ihrerseits in eine Drehbewegung versetzt. Der Spannbolzen 37 wird durch die in Figur 2 gezeigten Führungselemente 85 und 87 an einer Drehbewegung gehindert, so daß durch das Zusammenspiel von Innengewinde in der Gewindehülse 35 und Außengewinde 40 auf dem Spannbolzen 37 eine axiale Bewegung des Spannbolzens 37 in Figur 1 nach links, das heißt in Einspannrichtung, erfolgt. Dieser verlagert sich beim Festspannen der beiden Teile 3 und 5 nach links, wodurch der Kopfbereich 69/1 der Spannelemente 69 von der zweiten Schrägfläche 71 radial nach außen gedrängt wird, so daß eine radiale Aufweitung im Bereich der Kopfbereiche 69/1 der Spannelemente 69 erfolgt. Die Spannelemente legen sich mit ihrem Kopfbereich dabei an die erste Spannfläche 19 des Paßzapfens 7 an. Durch eine weitere Drehbewegung der Gewindehülse 35 findet eine feste Anlage zwischen den beiden Spannflächen 19 und 73 und dem Kopfbereich 69/1 der Spannelemente 69 statt. Durch die Schrägstellung der Spannflächen werden dabei axiale Spannkräfte aufgebaut, so daß die beiden Ringflächen 13 und 15 fest aneinandergepreßt und die Werkzeugteile genau gegeneinander ausgerichtet werden und ihre Drehachsen fluchten und die gemeinsame Drehachse 11 der Schnittstelle 1 bilden.

Dadurch, daß die Spannelemente 69 in axialer Richtung frei beweglich sind, können bei einer nicht korrekten Ausrichtung der beiden zu verspannenden Teile oder bei Maßtoleranzen der Spannflächen die Spannelemente ihre Lage so verändern, daß sie eine rundum gleichmäßige Spannkraft aufbringen können. Dabei werden unterschiedliche Spannkräfte innerhalb der Spannelemente 69 letztlich vermieden, so daß eine feste Anlage der Ringflächen 13 und 15 in ihrem gesamten Umfangsbereich gegeben ist, ohne daß wesentliche Unterschiede der axialen Spannkräfte auftreten.

Während der Spannbolzen 37 aufgrund der Betätigung des Winkelantriebs 41, 45 nach links in Einspannrichtung bewegt wird, gelangen die Spannelemente 69 mit ihren Endbereichen 69/2 in Anlage an den Widerlagern 55, sie können dann also keine axiale Ausweichbewegung nach links durchführen. Dadurch werden die Kopfbereiche 69/1 der Spannelemente 69 optimal zwischen den beiden Spannflächen 19 und 71 eingespannt.

Es ist ersichtlich, daß es für das Zusammenspiel zwischen den Spannebenen 19 und 71 mit den Kopfbereichen 69/1 der Spannelemente 69 belanglos ist, ob der Spannbolzen 37 unmittelbar von der Spannhülse 35 bewegt wird oder ob hier Zwischenelemente vorgesehen sind, die eine axiale Verlagerung des Spannbolzens 37 bewirken. Es ist grundsätzlich auch möglich, daß der Spannbolzen 37 in Rotation versetzt wird und dadurch über einen feststehenden Gewindebereich axial verlagert wird. Doch werden dabei im Spannbereich der Köpfe der Spannelemente Reibungskräfte erzeugt, so daß die Drehbewegung des Spannbolzens 37 etwas behindert wird.

Nach allem ist erkennbar, daß letztlich auch eine Umkehr der Gegebenheiten möglich ist. Es ist überdies denkbar, daß der Paßzapfen 7 am Spannschaft und die Ausnehmung 9 am Werkzeugträger vorgesehen sind.

Zum Lösen der Verbindung muß das Betätigungsorgan 41 in entgegengesetzter Richtung verdreht werden, so daß über die Zahnkränze 53 und 39 eine entgegengesetzte Drehbewegung der Gewindehülse 35 bewirkt wird. Dadurch verschiebt sich der Spannbolzen 37 aus der in Figur 1 dargestellten Verriegelungsposition axial nach rechts. Dadurch entfernen sich die Spannflächen 19 und 71 vom Kopfbereich 69/1 der Spannelemente 69, so daß die axialen Spannkräfte nachlassen. Durch die elastischen Elemente 89 werden die Spannelemente 69 in ihre Grundstellung in die Aufnahmetaschen 81 zurückverschwenkt, so daß ihre dem Spannbolzen 37 zugewandten Innenseiten parallel zu dessen Außenfläche verlaufen. Schließlich bewegt sich der Spannbolzen 37 so weit nach vorne, daß dessen Stirnseite 73 mit dem Anschlag 27 des Anschlußstutzens 23 in Wirkverbindung tritt. Der Spannbolzen 37 schiebt schließlich den Werkzeugträger 5 etwas aus der Ausnehmung 9 des Spannschafts 3. Dabei wird zumindest eine Lockerung der beiden Elemente erreicht. Für die Funktion dieser Lockerung ist es belanglos, ob die Stirnfläche 73 des Spannbolzens 37 an dem Anschlußstutzen 23 oder an der Grundfläche 21 des hohlen Paßzapfens 7 anschlägt.

Aus Figur 1 ist ersichtlich, daß die Dichtungsmittel 67 und 79 so ausgebildet sind, daß in allen Stellungen während der axialen Verlagerung des Spannbolzens 37 eine Abdichtung des im Inneren der Werkzeugteile verlaufenden Kanals für das Spül- beziehungsweise Kühlmittel gewährleistet ist.

Insgesamt ist erkennbar, daß mit Hilfe der hier beschriebenen Schnittstelle eine rundum gleichmäßige Anlage der Paßflächen 13 und 15 gewährleistet ist, so daß eine sehr genaue Maßhaltigkeit auch bei einem Werkzeugträgertausch sichergestellt ist. Dabei ist sichergestellt, daß durch die frei gegeneinander in axialer Richtung beweglichen Spannelemente 69 sehr gleichmäßige Spannkräfte aufgebaut werden, wobei die Spannkräfte nicht von einem Spannelement zum nächsten übertragen werden, so daß Ermüdungserscheinungen praktisch auszuschließen sind.

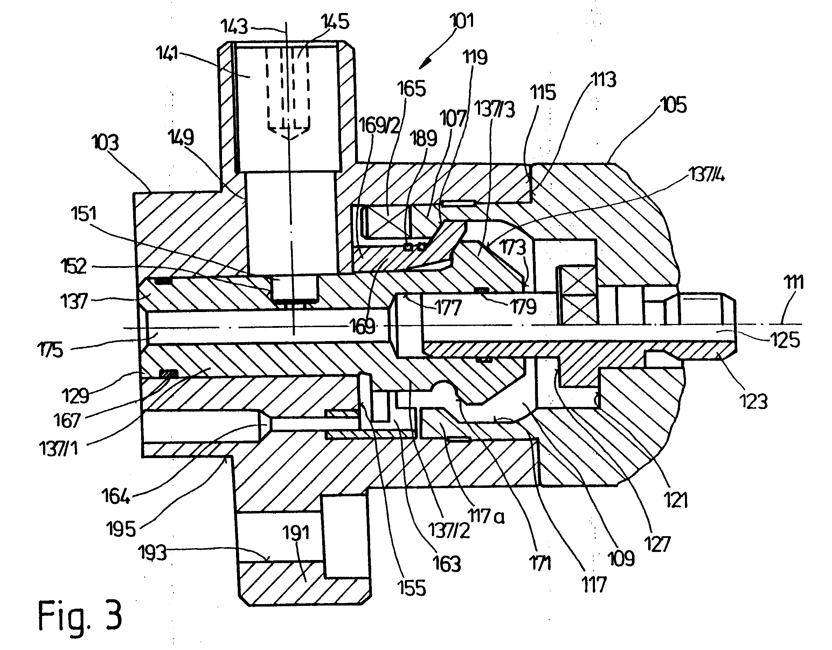

Die Darstellung gemäß den Figuren 3 bis 6 beschränkt sich im wesentlichen auf den Kern der Schnittstelle. Insbesondere ist der Schaft des Werkzeugträgers unmittelbar nach der Schnittstelle abgebrochen. Der Spannschaft der Schnittstelle kann auf beliebige Weise mit einer Werkzeugmaschine verbunden werden. Bei dem hier dargestellten Ausführungsbeispiel wird beispielhaft zur Befestigung an einer Werkzeugmaschine ein den Spannschaft umgebender Montageflansch gewählt.

Auch hier sei darauf verwiesen, daß die dargestellte Schnittstelle universell als Verbindungsstelle verwendbar ist, also auch als sogenannte Trennstelle zwischen einem Zwischenstück und einem Werkzeugträger.

Bei dem Längsschnitt gemäß Figur 3 durch die Schnittstelle 101 ist links ein Spannschaft 103 erkennbar, in den ein rechts dargestellter Spannschaft eines Werkzeugträgers 105 eingesteckt ist. Beide der Schnittstelle zugeordneten Teile sind zumindest in diesem Bereich kreiszylindrisch ausgebildet und haben praktisch den gleichen Außendurchmesser.

Der Werkzeugträger 105 ist mit einem Paßzapfen 107 versehen, dessen Außendurchmesser kleiner gewählt ist als der Außendurchmesser des übrigen Werkzeugträgers 105.

Der Paßzapfen 107 greift in eine in den Stirnbereich des Spannschafts 103 eingebrachte Ausnehmung 109 ein. Wenn der Paßzapfen 107 des Werkzeugträgers 105 in die Ausnehmung 109 des Spannschaftes 103 eingesetzt ist, liegt eine im Wurzelbereich des Paßzapfens 107 angeordnete, senkrecht auf der Längs- oder Drehachse 111 verlaufende erste Anlagefläche 115 des Werkzeugträgers 105 an einer die Ausnehmung 109 umgebenden zweiten Anlagefläche 113 im Stirnbereich des Spannschafts 103 an, so daß eine exakte Ausrichtung der beiden der Schnittstelle 101 zugeordneten Teile sichergestellt ist.

Der Paßzapfen 107 ist hohl ausgebildet und auf seiner Innenseite mit einer vorzugsweise umlaufenden Ringnut 117 versehen, deren Wandung im wesentlichen parallel zur Drehachse 111 verläuft. Im Bereich der Stirnfläche des Paßzapfens 107 ist eine vorzugsweise umlaufende Ringschulter 117a vorgesehen, so daß eine erste Spannfläche 119 gebildet wird, die gegenüber der Drehachse 111 unter einem Winkel verläuft und, von der Stirnseite des Paßzapfens 107 aus gesehen, in Richtung auf die Wandung im Bereich der Ringnut 117 ansteigt. Der Winkel ist frei wählbar und kann 90° bis 5°, vorzugsweise 60° bis 30°, insbesondere ca. 45° betragen.

Am Grund 121 des hohlen Paßzapfens 107 ist ein Anschlußstutzen 123 mit einem zentralen Durchlaßkanal 125 vorgesehen, durch welchen ein Kühl- und/oder Schmiermittel geführt werden kann. Die dem Spannschaft 103 zugewandte Stirnfläche 127 des Anschlußstutzens 123 kann als Anschlagfläche herangezogen werden.

Der Anschlußstutzen 123 ist auf beliebige Weise im Schaft des Werkzeugträgers 105 befestigt.

Auch der Spannschaft 103 ist mit einem durchgehenden Kanal 129 versehen, der hier konzentrisch zur Drehachse 111 angeordnet ist. Auch er dient der Zufuhr eines Kühl- und/oder Schmiermittels.

Der Kanal 129 nimmt einen Spannzapfen 137 auf, dessen Außendurchmesser an den Innendurchmesser des Kanals angepaßt ist. In die Wandung des Spannschafts 103 ist ein als Exzenter 141 ausgebildetes Betätigungsorgan eingebracht, dessen Drehachse 143 senkrecht zur Drehachse 111 des Spannschafts 103 angeordnet ist. Der Exzenter 141 ist im Querschnitt kreiszylindrisch ausgebildet und kann, wie in Figur 3 dargestellt, Bereiche verschiedener Außendurchmesser aufweisen. In seiner äußeren Stirnfläche ist ein Innensechskant 145 vorgesehen, in den ein geeignetes Werkzeug eingreifen kann, durch welches eine Drehung des Exzenters um seine Drehachse 143 ermöglicht wird.

Der Exzenter 141 ist in einer Bohrung 149 in der Wandung des Spannschafts 103 untergebracht, deren Innenfläche an die Außenkontur des Exzenters 141 angepaßt ist.

Auf seiner dem Spannschaft 137 zugewandten Stirnfläche weist der Exzenter 141 einen gegenüber der Drehachse 143 des Exzenters 141 versetzt angeordneten Exzenterbolzen 151 auf, welcher in eine in die Umfangsfläche des Spannzapfens 137 eingebrachte Nut 152 eingreift. Aus Figur 3 ist ersichtlich, daß die Breite der Nut 152 auf den Außendurchmesser des Exzenterbolzens 151 abgestimmt ist, das heißt, die Breite der Nut entspricht dem Außendurchmesser des Exzenterbolzens 151, dessen Außendurchmesser gegenüber dem Außendurchmesser des Exzenters 141 reduziert ist.

Die radial verlaufende Begrenzungsfläche beziehungsweise der Grund der Ausnehmung 109 dient als Widerlager 155 für Spannelemente 169 auf die unten noch genauer eingegangen wird.

Die Schnittstelle 101 ist mit einer bekannten Einrichtung zur Übertragung des von der Werkzeugmaschine aufgebrachten Drehmoments versehen. Hier ist im Spannschaft 103 ein einen Vorsprung 163 bildender Mitnehmerkeil eingebracht, der hier zusätzlich von einer Schraube 164 gehalten wird, die in axialer Richtung verlaufend den Grundkörper des Spannschafts 103 durchdringt. Für die Übertragung des Drehmoments ist jedoch die Befestigung des Vorsprungs irrelevant. Dieser greift in eine geeignete Ausnehmung 165 in der Stirnseite des Paßzapfens 107 ein, die dessen Wandung in axialer Richtung durchdringt. Die Breite der Ausnehmung ist auf die Breite des Vorsprungs 163 so abgestimmt, daß die Antriebskräfte des Spannschafts 103 im wesentlichen spielfrei übertragen werden können. Die Ausnehmung 165 ist in die Stirnseite des Paßzapfens 107 eingebracht, damit dort der Vorsprung 163 beim Einsetzen des Werkzeugträgers 105 in den Spannschaft 103 eingreift.

Der als Spannorgan dienende Spannbolzen 137 weist mehrere Bereiche mit unterschiedlichen Außendurchmessern auf. In seinem linken Bereich 137/1 ist der Außendurchmesser des Spannbolzens so gewählt, daß dieser in den Durchgangskanal 129 im Spannschaft 103 einführbar ist. Es ist dort auch eine vorzugsweise als O-Ring ausgebildete Dichtungseinrichtung 167 vorgesehen, die einen Austritt des Kühl- oder Schmiermittels aus dem Durchgangskanal 129 verhindert. In einem zweiten Bereich 137/2 ist der Außendurchmesser des Spannbolzens 137 so gewählt, daß dieser nicht beliebig weit in den Durchgangskanal 129 im Spannschafts 103 geschoben werden kann. Durch den dort vorgesehenen größeren Außendurchmesser wird quasi ein Anschlag geschaffen.

In diesem zweiten Bereich 137/2 sind auf der Außenseite des Spannbolzens 137 in geeigneten Ausnehmungen beziehungsweise Taschen mehrere Spannelemente 169 angeordnet, die sich in Längsrichtung des Spannschafts 103, also parallel zur Drehachse 111 der Schnittstelle 101 erstrecken.

Der Spannbolzen 137 weist noch einen dritten Bereich 137/3 mit noch größerem Außendurchmesser auf. Im Übergangsbereich zwischen dem zweiten Bereich 137/2 und dem zuletzt genannten Bereich 137/3 wird eine zweite Spannfläche 171 gebildet, die quasi als Ringschulter umlaufend ausgebildet ist. Die zweite Spannfläche steigt in Richtung auf die Stirnseite 173 des Spannbolzens 137 an. Der vorderste Außenbereich 137/4 des Spannbolzens 137 verjüngt sich in Richtung auf dessen Stirnfläche 173. Die Verjüngung dient dazu, den hohlen Paßzapfen 107 leichter über den Spannbolzen 137 zu schieben, während der Spannschaft 103 und der Werkzeugträgers 105 zusammengesetzt werden.

Der Spannbolzen 137 ist mit einem koaxial zur Drehachse 111 angeordneten Durchgangskanal 175 für das Kühl- und/oder Schmiermittel versehen. Dieser Kanal weist einen aufgeweiteten Bereich 177 auf, der in der Stirnfläche 173 mündet. Der Innendurchmesser dieses aufgeweiteten Bereichs ist an den Außendurchmesser des Anschlußstutzens 123 im Werkzeugträger 105 angepaßt. Der Anschlußstutzen 123 ragt so weit in den Spannzapfen 137 hinein, daß auch bei einer axialen Verlagerung des Spannbolzens immer eine sichere Abdichtung des Durchgangskanals gewährleistet ist. Auch in diesem Bereich ist ein in die Innenfläche im aufgeweiteten Bereich 177 versenkt angeordnetes Dichtungsorgan 179 vorgesehen, welches auf der Außenseite des Anschlußstutzens dichtend anliegt.

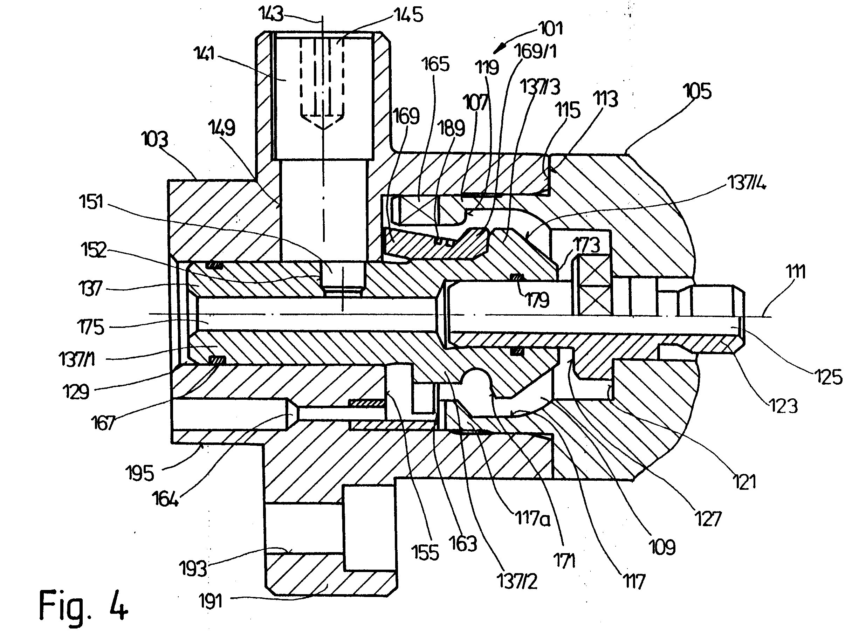

Die Längsschnittdarstellung gemäß Figur 4 zeigt die Schnittstelle 101, wie sie in Figur 3 dargestellt ist. Gleiche Teile sind mit gleichen Bezugszeichen versehen, so daß auf deren ausführliche Beschreibung hier verzichtet werden kann.

Bei der Darstellung gemäß Figur 4 befinden sich die Spannelemente 169 -im Gegensatz zur Darstellung gemäß Figur 3- in ihrer entriegelten Position. Dazu ist der Spannbolzen 137 durch den Exzenterbolzen 151 in seine nach rechts verschobene Lage verlagert worden, indem der Exzenter 141 gegenüber der in Figur 3 gestellten Lage verdreht wurde. Dadurch können sich die Spannelemente 169 an die Außenfläche des Spannbolzens 137 anlegen. Es wirken dabei elastische Rückstellorgane, beispielsweise Gummiringe 189, auf die Spannelemente 169 ein und drücken diese gegen die Umfangswandung des Spannbolzens 137.

Die Anzahl der Spannelemente 169 ist frei wählbar. Es können auch bei dem hier dargestellten Ausführungsbeispiel -wie bei Figur 2- sechs an der Außenwandung des Spannbolzens 137 anliegende Spannelemente 169 vorgesehen werden. Gegebenenfalls sind aber auch nur drei Spannelemente 169 ausreichend.

Im angelegten Zustand der Spannelemente 169 ist der Außendurchmesser des Spannbolzens 137 im Bereich des Kopfbereichs 169/1 so klein, daß der Spannbolzen mit dem Kopfbereich 169/1 der Spannelemente 169 in die Ausnehmung 109 im Paßzapfen 107 eingeführt werden kann.

Wenn die Spannelemente 169 durch die Wirkung der elastischen Rückstellorgane beziehungsweise der Gummiringe 189 in ihre angelegte Stellung verschwenkt sind, kann der Paßzapfen 107 des Werkzeugträgers 105 in den Spannschaft 103 eingeschoben werden, so daß die radialen Anlageflächen 113 und 115 aneinander liegen. Dabei ragen die Spannelemente 169 in das Innere des Paßzapfens 107. Anschließend kann das Betätigungsorgan 141 beziehungsweise der Exzenter durch einen geeigneten Steckschlüssel über den Innensechskant 145 um seine Drehachse 143 verdreht werden. Dadurch verlagert sich der Exzenterbolzen 151 innerhalb der Nut 152 so, daß der Spannbolzen 137 aus der in Figur 4 dargestellten Lage in die gemäß Figur 3 gezeigte Stellung nach links verschoben wird. Dadurch werden die in axialer Richtung frei beweglichen Spannelemente 169 gegen das Widerlager 155 verschoben. Ihr Kopfbereich 169/1 liegt auf der zweiten Spannfläche 171 an und wird in radialer Richtung nach außen verschoben. Dadurch gelangt der Kopfbereich auch in Anlage mit der ersten Spannfläche 119, wodurch der Werkzeugträger 105 fest in das Innere des Spannschafts 103 hineingezogen wird. Insgesamt ist also feststellbar, daß bei einer Verlagerung des Spannbolzens 137 nach links aufgrund der Betätigung des Exzenters 141 die Spannelemente 169 schließlich an einer axialen Verlagerung dadurch gehindert werden, daß ihr Endbereich 169/2 an dem Widerlager 155 anschlägt. Dadurch werden die Kopfbereiche 169/1 optimal zwischen den beiden Spannflächen 119 und 171 eingespannt. Die im Kopfbereich wirkenden Spannkräfte können auch dazu führen, daß die Spannelemente 169 in axialer Richtung verlagert werden. Das heißt also, Toleranzunterschiede bei den Längenabmessungen der Spannelemente werden während des Spannvorgangs ausgeglichen. Dadurch wird eine besonders gute Anlage der beiden Teile der Schnittstelle 101 sichergestellt.

Der Kopfbereich 169/1 der Spannelemente 169 kann - wie in den Figuren 3 und 4 beispielhaft dargestellt- so ausgebildet sein, daß er in dem verspannten Zustand gemäß Figur 3 möglichst flächig auch an dem Grund der Ringnut 177 anliegt und so eine in radialer Richtung nach außen wirkende Kraft entwickelt. Durch die Anlage des Kopfbereichs 169/1 sowohl an den Spannflächen 119 und 171 als auch am Grund der Ringnut 117 ergibt sich eine besonders hohe Steifigkeit der Schnittstelle.

Dadurch, daß der Exzenter 141 unmittelbar auf den Spannbolzen wirkt, ergibt sich eine relativ geringe Reibung während des Einspannvorgangs. Dadurch lassen sich bei einer Verdrehung des Exzenters besonders hohe Einspannkräfte aufbringen, ohne daß dadurch eine übermäßige Belastung des Exzenterbolzen 151 zu befürchten ist. Auch werden durch den unmittelbaren Eingriff des als Exzenter 141 ausgebildeten Betätigungsorgans die bei einer Drehbewegung des Exzenters aufgebrachten Drehmomente besonders verlustarm in Spannkräfte umgesetzt. Darüber hinaus zeichnet sich die in den Figuren 3 und 4 dargestellte Schnittstelle durch einen sehr einfachen Aufbau aus.

Die Verbindung zwischen Spannschaft 103 und Werkzeugträger 105 wird dadurch gelöst, daß der Exzenter 141 in entgegengesetzter Richtung verdreht wird. Dadurch verlagert sich der Spannbolzen 137 aus seiner Verriegelungsstellung gemäß Figur 3 nach rechts in seine Entriegelungslage gemäß Figur 4. Dabei können die Spannelemente 169 durch die Rückstellkräfte der der Gummiringe 189 in ihre Anlagestellung an der Außenfläche des Spannzapfens verschwenkt werden, so daß die auf die Anlageflächen 119 und 171 wirkenden Spannkräfte aufgehoben werden.

Aus Figur 4 ist ersichtlich, daß die Stirnfläche 127 des Anschlußstutzens 123 durch eine leichte Änderung der Geometrie des Anschlußstutzens auch so weit nach links verlagert werden kann, daß bei einer Verschiebung des Spannbolzens 137 in seine Entriegelungsstellung dessen Stirnfläche 173 an der Stirnfläche 127 anschlägt und damit den Paßzapfen 107 etwas aus dem Spannschaft 103 herausschiebt. Das heißt also, daß der Exzenter 141 nicht nur zur Verriegelung der beiden der Schnittstelle 101 zugeordneten Teile herangezogen werden kann, sondern auch zu deren aktiven Trennung.

Für die Funktion der Schnittstelle 101 ist deren Anbringung an einer Werkzeugmaschine unkritisch. Es ist beispielsweise möglich, den Spannschaft 103 mit einem Spannkegel in einer Werkzeugmaschine zu verankern.

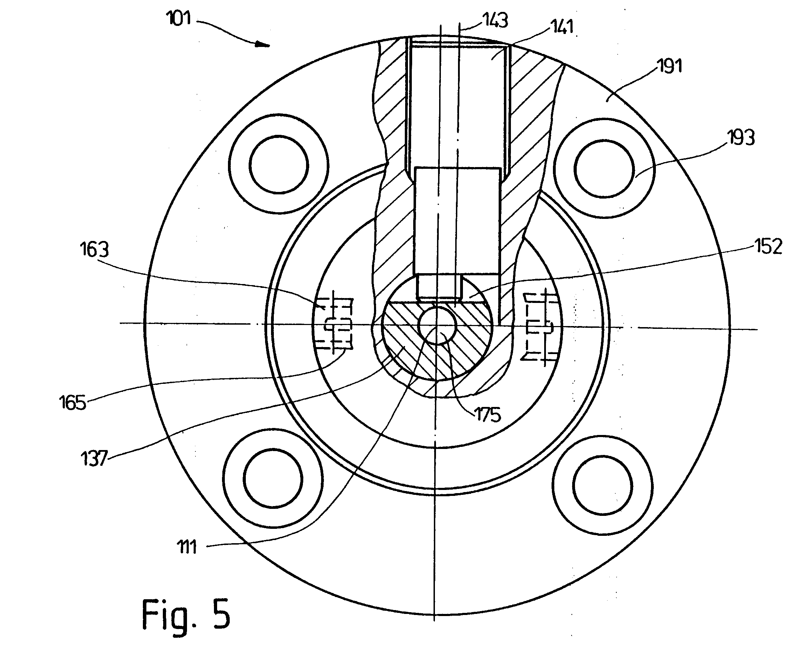

Bei dem hier dargestellten Ausführungsbeispiel ist, wie aus den Figuren 3 bis 5 ersichtlich, ein den Grundkörper des Spannschafts 103 umgebender Montageflansch 191 vorgesehen. In der Darstellung gemäß Figur 5 ist ein Teilschnitt vorgesehen, aus dem die Anordnung des Exzenters 141 im Montageflansch genauer ersichtlich ist. Gleiche Teile sind auch hier mit gleichen Bezugszeichen versehen, so daß auf deren ausführliche Beschreibung verzichtet werden kann.

Der Montageflansch 191 wird hier von vier der Aufnahme von Befestigungsschrauben dienenden Durchgangslöchern 193 durchdrungen. Anzahl und Anordnung der Durchgangslöcher ist beliebig. In Figur 3 und 4 wurde eines der Durchgangslöcher in die Schnittebene verlegt.

Die in Figur 5 gezeigte Schnittstelle 101 kann mit Hilfe von vier Befestigungsschrauben, die den Montageflansch 191 durchdringen, auf geeignete Weise an einer Werkzeugmaschine befestigt werden. Zur Entlastung der Befestigungsschrauben kann der den Montageflansch 191 überragende Ansatz 195 des Spannschafts 103 zumindest einzelne abgeflachte Bereiche am Umfang aufweisen, die mit entsprechenden Konturen an der Werkzeugmaschine zusammenwirken und einen Formschluß bilden.

In Figur 5 ist auch eine mögliche Anordnung der Vorsprünge 163 wiedergegeben, die in den Figuren 3 und 4 in die dort gewählte Schnittebene verlagert wurden. Anzahl und Anordnung der Vorsprünge sowie der zugehörigen Ausnehmungen 165 im Paßzapfen 107 können an die jeweiligen Bedingungen angepaßt werden.

Aus Figur 5 ist ersichtlich, daß die Nut 152 so ausgebildet ist, daß der Nutgrund quasi eine Kreissehne in der Durchschnittsfläche des Spannbolzens 137 bildet.

Für die Funktionsweise des Betätigungsorgans ist die Anordnung des Exzenters 141 frei wählbar. Bei dem hier dargestellten Ausführungsbeispiel ist die Mittelachse 143 des Exzenters 141 gegenüber der Drehachse 111 des Spannschafts 103 beziehungsweise des Werkzeugträgers 105 verschoben. Es ist jedoch sehr wohl möglich, daß die Mittelachse 143 die Drehachse 111 der Schnittstelle 101 schneidet.

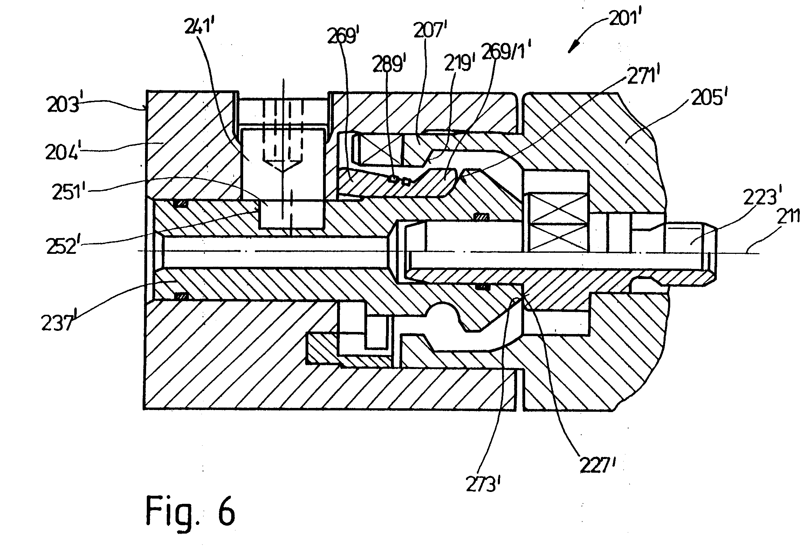

Der Längsschnitt gemäß Figur 6 zeigt ein weiteres Ausführungsbeispiel einer Schnittstelle 201', die die Verbindung eines Spannschafts 203' mit einem Werkzeugträger 205' darstellt. Das hier gezeigte Ausführungsbeispiel unterscheidet sich von dem gemäß den Figuren 3 bis 5 lediglich dadurch, daß kein Montageflansch vorgesehen ist. Der als Betätigungsorgan dienende Exzenter 241' durchdringt hier lediglich die Wandung 204' des Spannschafts 203' und tritt mit seinem Exzenterbolzen 251' in Eingriff mit dem Spannbolzen 237', der ansonsten gleich ausgebildet ist, wie der Spannbolzen 137 in den Figuren 3 bis 5. Er weist also auch eine quer zur Mittelachse 211 verlaufende Nut 252' auf, die der Aufnahme des Exzenterbolzens 251' dient.

Der Spannbolzen 237' ist in Figur 6 in seine vorderste Stellung, der Entriegelungsposition, gebracht, so daß die Stirnseite 273' des Spannbolzens 237 an der Stirnfläche 227' des Anschlußstutzens 223' anschlägt und somit den Paßzapfen 207' des Werkzeugträgers 205' etwas aus der Ausnehmung in der Stirnseite des Spannschafts 203 herausdrückt.

In dieser Stellung werden die Spannelemente 269' durch elastische Rückstellelemente 289' in ihre rückgestellte Position gebracht, so daß sie mit ihrer dem Spannzapfen 237' zugewandten Fläche an dessen Mantelfläche anliegen. Sie können dazu, wie anhand von Figur 6 ersichtlich auf ihrer Rückseite mit einer ebenen Anlagefläche versehen sein.

Auch bei der hier dargestellten Ausführungsform sind die Spannelemente 269' in Aufnahmetaschen in der Mantelfläche des Spannbolzens 237' untergebracht. Diese können durch einen Schleif- oder Fräsvorgang hergestellt werden oder -gemäß Figur 2- durch in die Mantelfläche des Spannbolzens eingesetzte Zwischenwände.

Der Kopf 269/1' der Spannelemente 269' kann, gemäß den Figuren 3 bis 5, im Schnitt mehr oder weniger kugelig beziehungsweise abgerundet ausgebildet sein, oder, wie in Figur 6 gezeigt, zwei praktisch parallele Spannflächen aufweisen, die mit den Anlageflächen 219' am Paßzapfen 207' und den Anlageflächen 271' am Spannbolzen 237' zusammenwirken. Die Berührungsfläche zwischen den Spannelementen 269' und dem Spannbolzen 237 ist so ausgebildet, daß bei einer Verlagerung des Spannbolzens 237' nach links die Spannelemente 269' radial nach außen verschwenkt werden, so daß die beiden Teile der Schnittstelle 201' miteinander verspannt werden.

Auch bei dem in Figur 6 gezeigten Ausführungsbeispiel wird ohne weiteres deutlich, daß aufgrund der Ausbildung des Betätigungsorgans als Exzenter 241' eine besonders reibungsarme Verlagerung des Spannbolzens 237' möglich ist, so daß die in das Betätigungsorgan beziehungsweise in den Exzenter 241' eingeleiteten Kräfte verlustarm in Spannkräfte umgesetzt werden. Dadurch ergibt sich ein ganz besonders sicherer Halt der beiden Teile der Schnittstelle 201' aber auch eine besonders exakte Ausrichtung.

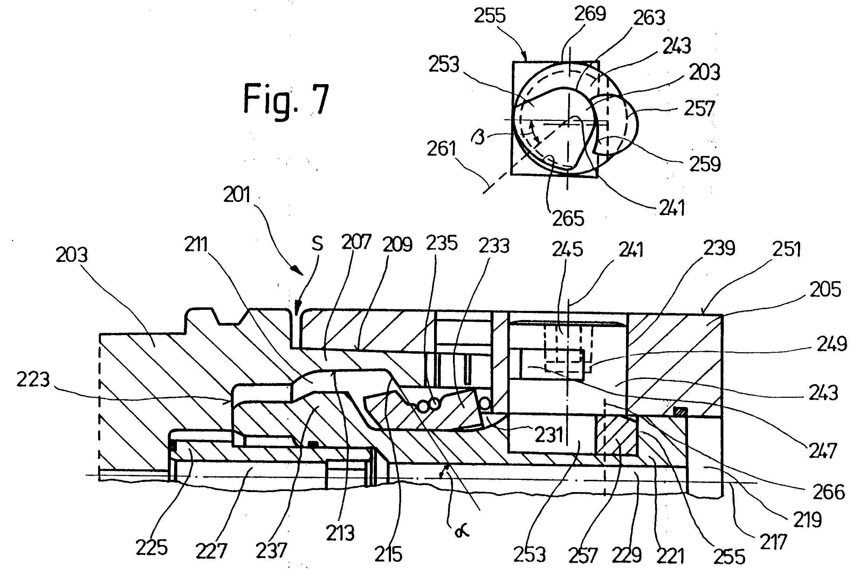

In den Figuren 7, 8 und 9 ist ein Längsschnitt durch eine Schnittstelle wiedergegeben, wobei verschiedene Einspannzustände dargestellt sind. In den Figuren 7 bis 9 wurden aus Gründen der besseren Darstellbarkeit rechts und links Teile der Schnittstelle abgebrochen.

Figur 7 zeigt eine Schnittstelle 201 mit einem Spannschaft 203, in den ein Werkzeugträger 205 eingeführt wurde. Eine Einspannung wurde noch nicht bewirkt. Der Werkzeugträger 205 weist einen Paßzapfen 207 auf, welcher in eine stirnseitig in den Spannzapfen 203 eingebrachte Ausnehmung 209 eingeführt wurde. Der Innendurchmesser der Ausnehmung ist so gewählt, daß der Paßzapfen spielfrei einsteckbar ist.

Der Paßzapfen seinerseits ist hohl ausgebildet und umschließt einen Freiraum 211, der eine umlaufende Ringnut 213 und eine diese begrenzende Ringschulter 215 aufweist. Diese dient als eine erste Spannfläche und verläuft unter einem Winkel α zur Drehachse 217 der Schnittstelle 201. Der Winkel kann in einem breiten Bereich festgelegt werden. Wesentlich ist, daß die Ringschulter 215 eine erste Anschlagfläche bildet, an welcher Spannelemente, auf die unten eingegangen wird, eingreifen können. Die Ringschulter wird dadurch gebildet, daß der Innendurchmesser des an die Ringnut 213 angrenzenden Wandbereichs, der die Stirnseite des Paßzapfens 207 schneidet, kleiner ist, als der der übrigen Ringnut.

Der Spannschaft 205 ist seinerseits hohl ausgebildet, in seinen Innenraum 219 ist ein in Richtung der Drehachse 217 verlagerbarer Spannbolzen 221 eingebracht, der sich bis in den Freiraum 211 im Paßzapfen 207 erstreckt. Er stößt mit seiner linken Stirnseite gegen den Boden 223 des Freiraums 211. In die Stirnseite des Spannbolzens 223 ist ein Anschlußstutzen 225 eingesetzt, der, ebenso wie der Spannbolzen 221 mit einem Durchgangskanal 227 versehen ist, und der in Flüssigkeitsverbindung mit dem konzentrisch zur Drehachse 217 verlaufenden Kanal 229 im Spannbolzen 221 steht. Durch diese Ausgestaltung der Schnittstelle kann ein Kühl- und/oder Schmiermittel durch den Spannschaft und durch den Werkzeugträger bis zum Werkzeug geleitet werden.

In die Mantelfläche des Spannbolzens sind am Umfang mehrere, vorzugsweise drei in Richtung der Drehachse 217 verlaufende Aufnahmetaschen 231 eingebracht, in denen die Spannelemente 233 untergebracht sind. Deren Länge ist kleiner als die Längsausdehnung der Aufnahmetaschen, so daß die Spannelemente 233 in Richtung der Drehachse 217 verschiebbar sind.

Die Spannelemente 233 werden durch elastische Rückhalteeinrichtungen, die vorzugsweise als elastische Ringe 235 ausgelegt sind, gegen die äußere Mantelfläche des Spannbolzens 221 beziehungsweise gegen den Grund der Aufnahmetaschen 231 gedrückt. Links von dem Vorderende der Spannelemente 233 -also in Zusammensteckrichtung vor den Spannelementen- ist eine vorzugsweise umlaufende Ringschulter 237 vorgesehen, deren Außendurchmesser dem Außendurchmesser der Spannelemente 233 entspricht, wenn diese, wie in Figur 7 eingezeichnet, in ihre rückgeschwenkte Stellung am Boden der Aufnahmetaschen 231 anliegen. Der Boden der Aufnahmetaschen verläuft im wesentlichen parallel zur Drehachse 217 der Schnittstelle 201. Die Spannelemente 233 weisen einen vorzugsweise ebenen Auflagebereich auf, so daß sie ohne zu verkippen in den Aufnahmetaschen liegen.

In die Wandung des Spannschafts 203 ist eine Ausnehmung 239 eingebracht, deren Mittelachse 241 im wesentlichen senkrecht auf der Drehachse 217 steht. In diese Aufnehmung ist ein als Exzenter 243 ausgebildetes Betätigungsorgan drehbar eingebracht. Es kann zur Betätigung mit einem Innensechskant 245 ausgestattet sein, der hier gestrichelt eingezeichnet ist. In seine Mantelfläche ist zur Begrenzung der Drehbewegung des Exzenters eine praktisch auf gleicher Höhe umlaufende Nut 247 eingebracht, deren Ende 249 als Anschlag für einen hier nicht eingezeichneten Begrenzungsstift dienen kann.

Die Höhe des Grundkörpers des Exzenters 243 ist so gewählt, daß er die äußere Mantelfläche 251 des Spannschafts 203 nicht überragt. Andererseits springt von dem Grundkörper des Exzenters 243 in den Innenraum 219 des Spannschafts 203 ein Exzenterbolzen 253 vor, der in einer Ausnehmung 255 in der äußeren Mantelfläche des Spannbolzens 221 zu liegen kommt. Außer dem Exzenterbolzen 253 ist in der Ausnehmung 255 noch ein Gleitstück 257 untergebracht, dessen Höhe der Höhe des Exzenterbolzens entspricht. In Richtung der Drehachse 217 gemessen sind die Abmessungen des Exzenterbolzens 253 und des Gleitstücks 257 so gewählt, daß beide Teile spielfrei in der Ausnehmung 255 angeordnet sind. Eine axiale Verlagerung der beiden Teile innerhalb der Ausnehmung 255 ist damit nicht ohne eine gleichzeitige Verschiebung des Spannbolzens 221 in Richtung der Drehachse 217 möglich.

Oberhalb der Schnittdarstellung in Figur 7 ist noch zur Verdeutlichung der Funktion und Ausrichtung des Exzenterbolzens 253 beziehungsweise des Gleitstücks 257 eine Draufsicht auf die Unterseite des Exzenters 243 und des Gleitstücks 257 dargestellt. Dabei sind auch die Konturen der Ausnehmung 255 in der Mantelfläche des Spannbolzens 221 angedeutet.

Das Gleitstück 257 ist in Draufsicht im wesentlichen kreisrund ausgebildet. Auf der dem Exzenterbolzen 253 zugewandten Seite des Gleitstücks 257 ist in dessen Außenfläche eine konkave Ausnehmung eingebracht, die vorzugsweise kreisbogenförmig ausgebildet ist und als Anlagefläche 259 für den Exzenterbolzen 253 dient.

Der Radius der äußeren Mantelfläche des Gleitstücks 257 wird mit R1 bezeichnet, der Radius der Anlagefläche 259 mit R2.

Die Unterseite des Gleitstücks 257 dient als Gleitfläche, sie ist daher eben ausgebildet. Die Oberseite ist gewölbt und vorzugsweise kreisbogenförmig, wobei der Krümmungsradius des Kreisbogens dem Radius der äußeren Mantelfläche des Spannbolzens 221 entspricht.

Der Exzenterbolzen 253 ist symmetrisch ausgebildet, seine Symmetrieachse 261 ist gestrichelt eingezeichnet. Sie schließt bei der Stellung des Exzenterbolzens gemäß Figur 7 mit der Horizontalen den Winkel β ein. Ein rückwärtiger Mantelbereich 263 des Exzenterbolzens 253, der vorzugsweise kreisbogenförmig ausgebildet ist, liegt dabei an der Anlagefläche 259 des Gleitstücks 257 an. Dem rückwärtigen Mantelbereich 263 gegenüberliegend ist ein Druckflächenbereich 265 vorgesehen, dessen Radius R3 größer ist als der des rückwärtigen Mantelbereichs 263 und dessen Größe auf den Radius R2 der Anlagefläche 259 des Gleitstücks 257 abgestimmt ist. Vorzugsweise sind die Radien R3 und R2 identisch. Der Abstand des rückwärtigen Mantelbereichs 263 zur Mittelachse 241 des Exzenters 243 beziehungsweise des Exzenterbolzens 257 ist kleiner als der Abstand des Druckflächenbereichs 265 zur Mittelachse 241.

Der Druckflächenbereich 265 und der rückwärtige Mantelbereich 263 sind durch Geradenabschnitte miteinander verbunden, wobei diese einen sich in Richtung des Druckflächenbereichs 265 öffnenden Winkel einschließen und symmetrisch zur Symmetrieachse 261 angeordnet sind. In Draufsicht gesehen hat der Exzenterbolzen 253 also ein etwa mit einer Parabel vergleichbare Form, wobei der rückwärtige Mantelbereich 263 den kreisbogenförmigen Scheitel der Parabel bildet. Diesem Bereich gegenüberliegend ist der entgegengesetzt gekrümmte Druckflächenbereich 265 angeordnet.

Das Gleitstück 257 ist, in Draufsicht gesehen, im wesentlichen mondsichelförmig ausgebildet. Der Kreisbogenabschnitt der Anlagefläche 259 ist gleichsinnig geöffnet wie der verbleibende Kreisbogenabschnitt der übrigen Außenfläche des Gleitstücks 257. Aufgrund der kreisbogenförmigen Außenfläche ist das Gleitstück schwenkbar um seine parallel zur Mittelachse 241 des Exzenters 243 verlaufende Schwenkachse 266 beweglich in der Ausnehmung 255 im Spannbolzen 221 gelagert.

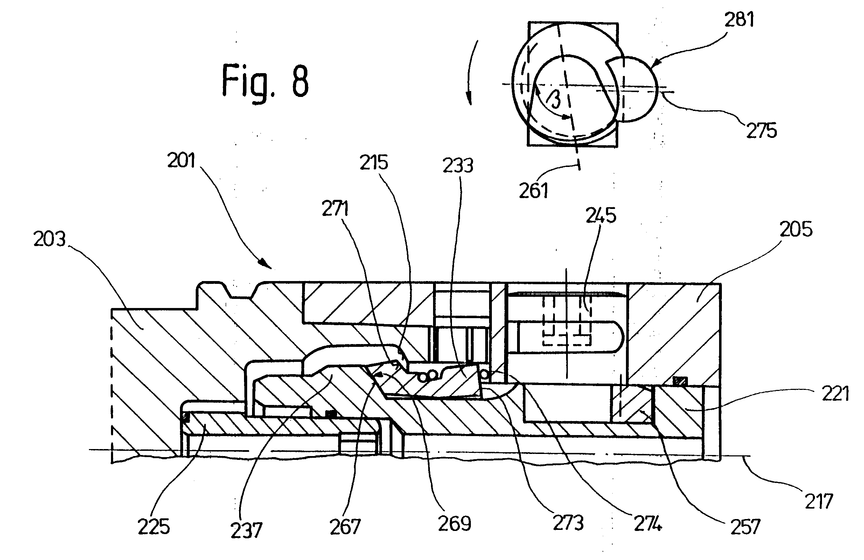

Figur 8 zeigt wiederum die in Figur 7 dargestellte Schnittstelle 201. Gleiche Teile sind mit gleichen Bezugszeichen versehen, so daß auf deren ausführliche Beschreibung verzichtet werden kann.

Während bei der Darstellung gemäß Figur 7 die beiden Teile der Schnittstelle 201, also der Spannschaft 203 und der Werkzeugträger 205 lediglich ineinander geschoben wurden, gibt Figur 8 einen Zustand wieder, bei welchem der Exzenter 243 verdreht wurde, so daß die Verspannung der der Schnittstelle 201 zugeordneten Teile eingeleitet wird. Dies ist daran ersichtlich, daß die Symmetrieachse 261 des Exzenterbolzens 253 mit der Horizontalen einen Winkel von β > 90° einschließt. Während bei Figur 7 der rückwärtige Mantelbereich 363 des Exzenterbolzens 253 mit der Anlagefläche 259 des Gleitstücks 257 in Eingriff ist, berührt nun aufgrund der Verdrehung des Exzenters der Druckflächenbereich 265 die Anlagefläche 259.

Aus den Figuren 7 bis 9 ist ersichtlich, daß der Abstand des rückwärtigen Mantelbereichs 263 des Exzenterbolzens 253 kleiner ist als der Abstand des Druckflächenbereichs 265 zur Mittelachse 241. Wenn also bei der Stellung des Exzenters gemäß Figur 7 das Gleitstück mit dem rückwärtigen Mantelbereich des Exzenterbolzens in Berührung stand und nunmehr mit dem Druckflächenbereich 265 des Exzenterbolzens in Eingriff tritt, so wird das Gleitstück 253 gegenüber der Mittelachse 241 verlagert, nämlich nach rechts verschoben. Dadurch, daß Exzenterbolzen und Gleitstück ohne axiales Spiel in der Ausnehmung 255 im Spannbolzen 221 untergebracht sind, stellt sich aufgrund der axialen Verlagerung des Gleitstücks 257 eine Verschiebung des Spannbolzens 221 nach rechts ein. Dadurch kann auch der Werkzeugträger 205 beziehungsweise dessen Paßzapfen 207 weiter nach rechts verlagert werden, so daß der Werkzeugträger 205 weiter in den Spannschaft 203 eingeschoben werden kann und somit der in Figur 7 ersichtliche Spalt S zwischen den einander zugewandten Anlageflächen von Spannschaft und Werkzeugträger entfällt. Durch die Verlagerung des Spannbolzens 221 nach rechts kann nämlich der Boden beziehungsweise die Stirnseite 223 des Freiraums 211, der an der Stirnfläche des Spannbolzens 221 anliegt, nach rechts verlagert werden.

Der Anschlußstutzen 225 ist mit dem Werkzeugträger 205 starr gekoppelt. Durch geeignete Dichtungsmittel wird ein Austritt der im Inneren des Anschlußstutzens beziehungsweise Spannbolzens befindlichen Kühlflüssigkeit vermieden.

Durch die Verschiebung des Spannbolzens 221 gelangt eine geneigte Anlaufschräge 267 der Ringschulter 237 des Spannbolzens 221 in Eingriff mit einer vorzugsweise unter gleichem Winkel verlaufenden Auflauffläche 269 an der Vorderseite der Spannelemente 233.

Die Anlaufschräge 267 und die Auflauffläche 269 sind bei dem hier dargestellten Ausführungsbeispiel etwa um 60° gegenüber der Horizontalen beziehungsweise der Drehachse 217 geneigt. Durch den Druck der Anlaufschräge wird der vordere Teil der Spannelemente 233 gegen die Wirkung der elastischen Ringe 235 angehoben, so daß schließlich eine Spannfläche 271 am Kopf der Spannelemente, die der Auflauffläche 269 gegenüberliegend angeordnet ist, mit der Ringschulter 215 in Eingriff tritt.

Wenn die Anlaufschräge 267 gegen die Auflauffläche 269 anstößt, wird eine axiale Verlagerung des Spannelements 233 bewirkt, bis die in den Figuren rechte Seite, das heißt, die rückwärtige Endfläche des Spannelements gegen eine Anschlagschulter 274 des Spannschafts 203 stößt, die in den Innenraum 219 ragt. Bei einer Verschiebung des Spannbolzens werden also zunächst die Spannelemente axial verlagert, bis sie an die Anschlagschulter 274 anstoßen. Bei einer weiteren Verlagerung des Spannbolzens findet dann die Schwenkbewegung der Spannelemente statt, das heißt, das der Anschlagschulter gegenüberliegende Ende beziehungsweise der Kopf der Spannelemente 233 wird -in radialer Richtung gesehen- nach außen geschwenkt, so daß sich eine Durchmesservergrößerung ergibt.

Da alle Spannelemente 233 unabhängig voneinander frei beweglich sind, werden während des Einspannens geringfügige Dimensionsabweichungen der einzelnen Spannelemente untereinander optimal ausgeglichen und gleichmäßige Spannkräfte aufgebaut.

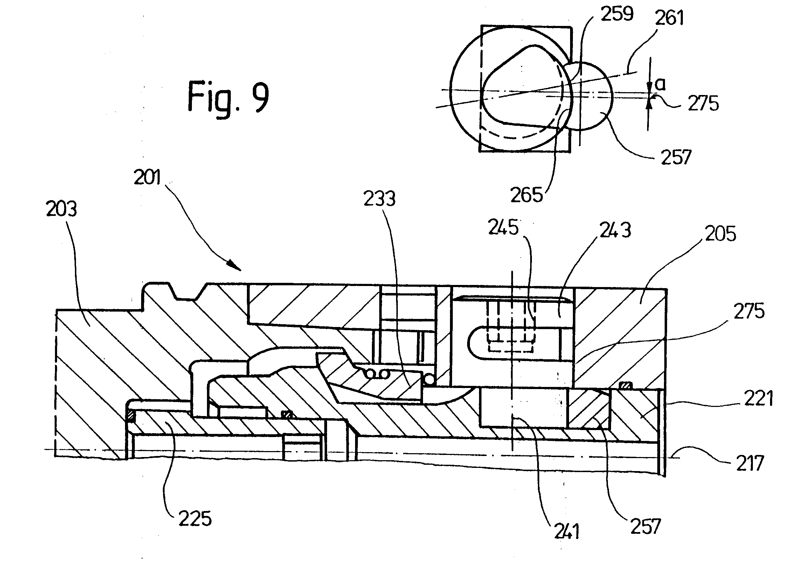

Figur 9 zeigt die Schnittstelle 201 in Ihrem verspannten Zustand. Der Exzenter 253 ist nun gänzlich in seine Verriegelungsstellung verdreht worden. Gemäß der Draufsicht auf die Unterseite des Exzenters entspricht dies einer durch einen Pfeil angedeuteten Drehung gegen den Uhrzeigersinn. Die Symmetrieachse 261 ist über die Horizontale hinaus verdreht. Der Druckflächenbereich 265 des Exzenterbolzens 253 liegt auf dem gesamten Bereich der Anlagefläche 259 des Gleitstücks 257 an, das heißt, die Spannkräfte werden von dem Exzenterbolzen 253 flächig auf das Gleitstück übertragen. Dieses liegt mit seinem rückwärtigen Mantelbereich 263 an einer konkav ausgebildeten Begrenzungswand der Ausnehmung 255 im Spannbolzen 221 an.

In dieser Stellung des Exzenters 243 ist der Spannbolzen 221 ganz nach rechts in seine Verriegelungsstellung verschoben. Durch das Zusammenspiel der Anlaufschräge 267 der auf dem Spannbolzen 221 vorgesehenen Ringschulter 237 mit der Anlauffläche 269 am Kopf der Spannelemente 233 hat eine maximale Verschwenkung der Spannelemente stattgefunden, so daß die als zweite Spannfläche dienende Spannfläche 271 fest gegen die erste Spannfläche beziehungsweise Ringschulter 215 auf der Innenfläche des Paßzapfen 207 gepreßt wird. Durch die Schwenkbewegung der Spannelemente und durch das Zusammenwirken der verschiedenen Spann- und Anlageflächen wird der Paßzapfen 207 beziehungsweise der Werkzeugträger 205 fest in den Spannschaft 203 hineingezogen. Die den in Figur 7 dargestellten Spalt S rechts und links begrenzenden Ringflächen von Spannschaft 203 und Werkzeugträger 205 liegen nun fest aneinander und gewähren eine optimale Ausrichtung zwischen den beiden Teilen der Schnittstelle 201.

Der Exzenter 243 ist so angeordnet, daß seine Mittelachse 241 die Drehachse 217 des Werkzeugs schneidet. Aus den Figuren 7 bis 9 ist ersichtlich, daß die Symmetrieachse 275 des Gleitstücks 257 und damit auch seine Schwenkachse 266 gegenüber der Mittelachse 241 verlagert ist. In Figur 9 ist der hier gegebene Abstand a angedeutet. Auf diese Weise kommt der Kraftangriffspunkt zwischen Gleitstück und Spannbolzen unterhalb der Verbindungslinie der Mittelachse 241 des Exzenters 243 und der Symmetrieachse 275 des Gleitstücks 257 zu liegen. Es ergibt sich daher beim Spannen ein Kniehebeleffekt, so daß die Spannkraft durch ein niedrigeres Drehmoment am Exzenter 243 aufgebracht werden kann.

Beim Lösen der Verspannung der Schnittstelle 201 ist eine minimale axiale Verlagerung des Spannbolzens 221 in die Verspannungsrichtung erforderlich, so daß ein zusätzliches Lösemoment aufgebracht werden muß. Es ergibt sich also eine Selbsthemmung der Exzenterverspannung, so daß auch bei starken Vibrationen und Belastungen eine versehentliche Entriegelung der Verspannung mit hoher Sicherheit auszuschließen ist.

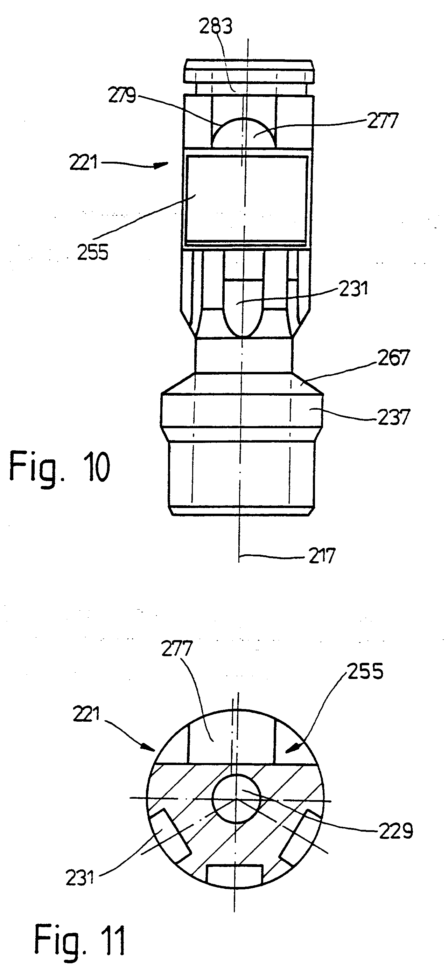

Figur 10 zeigt eine Draufsicht auf die in den Figuren 7 bis 9 oben liegende Seite des Spannbolzens 221. Deutlich ist die Ausnehmung 255 zu erkennen, die der Aufnahme sowohl des Exzenterbolzens 253 als auch des Gleitstücks 257 dient. Der den Exzenterbolzen aufnehmende Bereich der Ausnehmung 255 weist eine ebene Bodenfläche auf und ist im wesentlichen rechteckförmig ausgebildet. Er kann einfach hergestellt werden, indem beispielsweise eine senkrecht zur Längs- oder Drehachse 217 des Spannbolzens 221 verlaufende Nut eingebracht wird. In dem über der Drehachse 217 liegenden Bereich der im wesentlichen rechteckförmigen Ausnehmung 255 schließt sich ein Abschnitt 277 an, dessen Bodenbereich mit dem Boden der rechteckförmigen Ausnehmung eine Fläche bilden kann. Dies ist immer dann der Fall, wenn die Höhe des Exzenterbolzens 253 gleich gewählt ist wie die Höhe des Gleitstücks 257.

Der Abschnitt 277 zeichnet sich durch einen bogenförmig, vorzugsweise kreisbogenförmig ausgebildeten Wandbereich 279 aus, dessen Radius so gewählt ist, daß der rückwärtige Mantelbereich 281 des Gleitstücks 257 flächig an diesen Wandbereich anliegt. Auf diese Weise ergibt sich eine flächige Anlage während des Spannvorgangs, so daß Linienberührungen zwischen Gleitstück und dem Wandbereich vermieden werden und der Verschleiß besonders niedrig ist.

Durch die Ausgestaltung des Abschnitts 277 wird das Gleitstück 257 sicher gehalten. Es bedarf keiner weiteren Befestigung oder einer Achse zu dessen Lagesicherung. Das Werkzeug kann daher einfach realisiert werden. Außerdem wird eine Schwenk- beziehungsweise Drehbewegung des Gleitstücks während des Ein- und Ausspannens der Teile der Schnittstelle 201 ermöglicht. Dadurch läßt sich eine flächige Anlage zwischen dem Exzenterbolzen und dem Gleitstück einerseits und dem Gleitstück und dem Spannbolzen andererseits sicherstellen. Der Verschleiß während des Ein- und Ausspannens wird dadurch auf ein Minimum reduziert, so daß sich eine sehr hohe Standzeit der Schnittstelle ergibt.

Aus Figur 10 ist ersichtlich, daß das Gleitstück 257 relativ klein ausgebildet sein kann. Es kann daher hochwertiges, sehr festes Material für das Gleitstück verwendet werden, ohne daß die Kosten der Herstellung für das Werkzeug nachteilig beeinflußt werden. Da das Gleitstück aufgrund der einfachen Form leicht herstellbar ist, sind die Herstellungskosten auch bei der Verwendung hochfester Materialien wie Stahl, Hartmetall oder auch Keramik niedrig.

Aus Figur 10 ist ersichtlich, daß die Ringschulter 237 bei diesem Ausführungsbeispiel umlaufend ausgebildet ist. Dadurch ergibt sich auch eine durchgehende, umlaufende Anlaufschräge 267 für die in Figur 10 nicht dargestellten Spannelemente 233. Es ist jedoch ausreichend, wenn jeweils einem Spannelement ein Bereich einer Anlaufschräge zugeordnet ist, so daß dann also keine durchgehende Ringschulter mit einer durchgehenden Anlaufschräge vorgesehen zu werden braucht.

Figur 10 zeigt außerdem, daß die Aufnahmetaschen 231 für die Spannelemente 233 als in Richtung der Drehachse 217 verlaufende Nuten ausgebildet und damit ebenfalls leicht realisierbar sind.

Im Bereich des hinteren Endes des Spannbolzens 221 ist noch eine Ringnut 283 erkennbar, die der Aufnahme eines geeigneten Dichtelements dient, so daß auch bei einer Verlagerung des Spannbolzens in dessen Inneren geführtes Kühl- beziehungsweise Schmiermittel nicht austreten kann.

Figur 11 zeigt schließlich einen Querschnitt durch den Spannbolzen 221, der einerseits durch die Ausnehmung 255 und andererseits durch die nach vorne versetzten Aufnahmetaschen 231 für die Spannelemente 233 verläuft.

Im Inneren des Spannbolzens 221 ist der Kanal 229 für das Kühl- beziehungsweise Schmiermittel zu sehen. Bei dem hier dargestellten Ausführungsbeispiel sind sechs Aufnahmetaschen 231 vorgesehen. Die Anzahl der Spannelemente kann frei gewählt werden.

Die Schnittdarstellung zeigt, daß der Boden der Ausnehmung 255 eben ist und bei den Figuren 7 bis 9 senkrecht zur dortigen Bildebene verläuft. Die Schnittdarstellung gemäß Figur 11 läßt den Abschnitt 277 erkennen, der der Aufnahme des Gleitstücks 257 dient.

Der Spannbolzen ist im Schnitt vorzugsweise kreisförmig ausgebildet.

Nach allem ist erkennbar, daß die Schnittstelle 201 einfach aufgebaut ist und für eine sichere Verspannung von Spannschaft 203 und Werkzeugträger 205 dient. Eine versehentliche Lockerung der Teile, auch aufgrund von Vibrationen, ist mit hoher Sicherheit ausgeschlossen. Die Übertragung der von dem Exzenter 243 aufgebrachten Kräfte über das Gleitstück auf den Spannbolzen erfolgt über Berührungsflächen, so daß punkt- oder linienförmige Belastungen mit hoher Sicherheit ausgeschlossen werden. Dies ergibt einen geringen Verschleiß und eine hohe Standfestigkeit der Schnittstelle. Dabei sind die zur Erzeugung der Verspannung erforderlichen Kräfte mittels handgetriebener Werkzeuge ohne weiteres aufzubringen, so daß die Verbindung zwischen Spannschaft und Werkzeugträger einfach herstellbar ist. Auch ist die Lösung der beiden Teile der Schnittstelle ohne weiteres per Hand möglich.

Aus den Figuren 7 bis 9 ergibt sich außerdem, daß die Entriegelung der Schnittstelle 201 durch eine Drehung des Exzenters 243 in entgegengesetzter Richtung erfolgt. Bei der Draufsicht auf die Unterseite des Exzenters entspricht dies einer Drehung im Uhrzeigersinn.

Ausgehend von Figur 9 ist ersichtlich, daß zunächst während der Öffnungsbewegung der Exzenterbolzen 253 das Gleitstück 257 wieder etwas nach rechts in Verriegelungsrichtung verschiebt. Das heißt, das Öffnungsmoment ist -wie oben dargelegt- aufgrund eines Kniehebeleffekts leicht erhöht. Sobald die Symmetrieachse 261 des Exzenterbolzens 253 die in Figur 9 horizontale Stellung überwunden hat, in welcher die Symmetrieachse parallel verläuft zur Drehachse 217 der Schnittstelle 201, ergibt sich ein geringeres Drehmoment zum Entriegeln der Schnittstelle. Während des Öffnungsvorgangs erreicht der Exzenterbolzen 253 zunächst die in Figur 8 wiedergegebene Stellung, in welcher die Symmetrieachse 261 des Exzenterbolzens 253 fast senkrecht steht. Sobald der Exzenterbolzen über die senkrechte Stellung hinaus verdreht wird, übt der Druckflächenbereich 265 eine Schubkraft auf die linke Begrenzungsfläche der Ausnehmung 255 aus und schiebt damit den Spannbolzen 221 nach links. Dieser stößt mit seiner Stirnseite gegen den Boden 223 des Freiraums 211 im Paßzapfen 207 und schiebt damit den Werkzeugträger 205 aus dem Spannschaft 203 heraus, so daß wiederum der in Figur 7 dargestellte Spalt S zwischen Werkzeugträger und Spannschaft entsteht.

Es zeigt sich also, daß die als Exzenter 243 ausgebildete Betätigungseinrichtung der Schnittstelle 201 sowohl zum Verspannen der beiden Teile, Spannschaft 203 und Werkzeugträger 205, geeignet ist, aber auch dazu, die beiden Teile auseinanderzuschieben, so daß eine einfache Entnahme des Werkzeugträgers aus dem Spannschaft möglich ist.

Nach allem zeigt sich, daß die hier beschriebene Schnittstelle zwischen einem Spannschaft und einem Werkzeugträger angeordnet sein kann, aber auch zwischen einem Spannschaft beziehungsweise einem Werkzeugträger einerseits und einem zwischen diesen Teilen angeordneten Zwischenstück andererseits.

## Patentansprüche

1. Schnittstelle zwischen einem Werkzeugträger und einem den Werkzeugträger haltenden Spannschaft einer Werkzeugmaschine, mit einem am Werkzeugträger vorgesehenen hohlen Paßzapfen, der auf seiner Innenwand mit einer ersten Spannfläche versehen ist, mit einer an der Stirnseite des Spannschafts vorgesehenen, den Paßzapfen aufnehmenden Ausnehmung, in welcher ein in axialer Richtung innerhalb des Spannschafts verschiebbares Spannorgan angeordnet ist, welches auf seiner Außenseite mit einer zweiten Spannfläche versehen ist, die mit der ersten Spannfläche über Anlageflächen aufweisende Spannelemente zusammenwirkt, welche auf der Außenseite des Spannorgans angeordnet und entgegen einer elastischen Rückstellkraft durch das Spannorgan radial nach außen schwenkbar und in Eingriff mit der ersten und zweiten Spannfläche bringbar sind, wobei die Spannelemente am Umfang des als Spannbolzen (37;137;237';221) ausgebildeten Spannorgans in axialer Richtung frei beweglich angeordnet sind und lediglich in einem Endbereich (Kopfbereich 69/1) mit Anlageflächen versehen sind, die mit der ersten Spannfläche (19;119;219';215) im Paßzapfen (7;107;207';267) und mit der zweiten Spannfläche (71;171;271';267) des Spannbolzens zusammenwirken und bei einer Verlagerung des Spannorgans in Einspannrichtung zwischen die zweite Spannfläche (71;171;271';267) und die erste Spannfläche (19;119,219';215) gepreßt werden, so daß die beiden der Schnittstelle (1;101;201';201) zugeordneten Teile (3;103;203';203 und 5;105;205';205) fest miteinander verspannt werden.

2. Schnittstelle nach Anspruch 1, **dadurch gekennzeichnet**, daß die Spannelemente (69) in auf der Außenseite des Spannbolzens (37) vorgesehene Aufnahmetaschen (81) in axialer Richtung beweglich untergebracht sind.

3. Schnittstelle nach Anspruch 1 oder 2, **dadurch gekennzeichnet**, daß die Aufnahmetaschen (81) durch in axialer Richtung des Spannbolzens (37) an dessen Umfangswandung befestigten Führungselementen (83) gebildet werden, deren in Umfangsrichtung gemessener Abstand an die Breite der Spannelemente (69) angepaßt ist.

4. Schnittstelle nach einem der Ansprüche 1 bis 3, **dadurch gekennzeichnet**, daß mindestens eines der Führungselemente (85,87) in eine auf der Innenseite der den Spannbolzen (37) aufnehmenden Ausnehmung vorgesehene Nut eingreift, so daß der Spannbolzen so festgelegt wird, daß dieser ausschließlich in axialer Richtung hin und her bewegbar ist.

5. Schnittstelle nach einem der Ansprüche 1 bis 4, **dadurch gekennzeichnet**, daß der Spannbolzen (37) mittels eines Winkelantriebs (35,41) gegenüber dem Spannschaft (3) in axialer Richtung verlagerbar ist.

6. Schnittstelle nach Anspruch 5, **dadurch gekennzeichnet**, daß der Winkelantrieb eine koaxial zum Spannbolzen (37) angeordnete Gewindehülse (35), die mit einem Innengewinde versehen ist, sowie ein mit der Gewindehülse zusammenwirkendes drehbares Betätigungsorgan (41) aufweist, welches mit einem ersten Zahnkranz (53) versehen ist, und daß der Spannbolzen (37) auf seiner Außenseite zumindest einen Bereich (37/2) aufweist, der mit einem Außengewinde (40) versehen ist, welches mit dem Innengewinde der Gewindehülse (35) in Eingriff bringbar ist.

7. Schnittstelle nach Anspruch 5 oder 6, **dadurch gekennzeichnet**, daß die Gewindehülse (35) mit einem mit dem ersten Zahnkranz (53) zusammenwirkenden Zweiten Zahnkranz (39) versehen und drehbar ausgebildet ist, während der Spannbolzen (37) innerhalb des Spannschafts (3) so festgelegt ist, daß er lediglich in axialer Richtung hin und her verschiebbar ist.

8. Schnittstelle nach einem der Ansprüche 5 bis 7, **dadurch gekennzeichnet**, daß das Betätigungsorgan (41) des Winkelantriebs als drehbare Hülse (41) ausgebildet ist, deren Drehachse (43) auf der Drehachse (11) der Gewindehülse (35) steht, und so ausgebildet ist, daß der erste Zahnkranz (53) und der zweite Zahnkranz (39) ineinandergreifen.

9. Schnittstelle nach einem der Ansprüche 1 bis 8 **gekennzeichnet durch** ein mit den Spannelementen (69) zusammenwirkendes Widerlager (55), welches die Spannelemente bei einer Bewegung des Spannbolzens (37) in Einspannrichtung so hält, daß deren dem Widerlager (55) gegenüberliegenden Enden (69/1) von der zweiten Spannfläche (71) des Spannbolzens (37) gegen die erste Spannfläche (19) im Paßzapfen (7) gepreßt miteinander verspannt werden.

10. Schnittstelle nach Anspruch 9, **dadurch gekennzeichnet**, daß das Widerlager (55) durch eine in axialer Richtung stationäre Schulter gebildet wird.

11. Schnittstelle nach Anspruch 10, **dadurch gekennzeichnet**, daß die Schulter durch eine Distanzscheibe (55) gebildet wird, die einerseits an der Gewindehülse (35) und andererseits an einer Halterung (59) anliegt.

12. Schnittstelle nach Anspruch 11, **dadurch gekennzeichnet**, daß die Halterung von einer Mitnehmerscheibe (59) gebildet wird, die mindestens einen in eine entsprechende Ausnehmung (65) im Werkzeugträger (5) oder dessen Paßzapfen (7) eingreifenden Vorsprung (63) aufweist und mit dem Spannschaft (3) starr verbunden ist.

13. Schnittstelle nach einem der Ansprüche 1 bis 12, **dadurch gekennzeichnet**, daß das Spannorgan (37) einen durchgehenden Längskanal (75,77) für ein Kühl- und/oder Schmiermittel aufweist und daß auf seiner Außenseite Dichtungsmittel (79) vorgesehen sind.

14. Schnittstelle nach einem der Ansprüche 1 bis 13, **dadurch gekennzeichnet**, daß das Spannorgan (37) auf seiner Stirnseite (73) mit einem vom Werkzeugträger (5) entspringenden Anschlußstutzen (23) zusammenwirkt, über den das Kühl- oder Schmiermittel weitergeleitet wird.

15. Schnittstelle nach Anspruch 14, **dadurch gekennzeichnet**, daß der Anschlußstutzen (23) mit einer Anschlagfläche (27) versehen ist, gegen die -zum Auswerfen des Werkzeugträgers (5)- der Spannbolzen (37) verfahrbar ist.

16. Schnittstelle nach Anspruch 15, **dadurch gekennzeichnet**, daß die erste Spannfläche (19) im Paßzapfen (7) als umlaufende Schulter einer Ringnut (17) ausgebildet ist.

17. Schnittstelle nach einem der Ansprüche 1 bis 16, **dadurch gekennzeichnet**, daß die zweite Spannfläche (71) am Spannschaft (3) als umlaufende Fläche einer Ringschulter ausgebildet ist.

18. Schnittstelle nach einem der Ansprüche 1 bis 17, **dadurch gekennzeichnet**, daß die Spannflächen (19,71) mit der Längs- oder Drehachse (11) des Werkzeugträgers (5) und des Spannschafts (3) einen Winkel von 90° bis 5°, vorzugsweise von 60° bis 30°, insbesondere von ca. 45°, einschließen.

19. Schnittstelle nach einem der vorhergehenden Ansprüche, **gekennzeichnet durch** ein unmittelbar auf den Spannbolzen (137) wirkendes, diesen axial verlagerndes Betätigungsorgan (141).

20. Schnittstelle nach einem der vorhergehenden Ansprüche, **dadurch gekennzeichnet**, daß das Betätigungsorgan als im wesentlichen senkrecht auf der Mittel- und/oder Drehachse (111) des Spannbolzens (137) stehender Exzenter (141) ausgebildet ist.

21. Schnittstelle nach einem der vorhergehenden Ansprüche, **dadurch gekennzeichnet**, daß der Exzenter (141) in der Wandung des Spannschafts (103) drehbar gelagert ist.

22. Schnittstelle nach einem der vorhergehenden Ansprüche, **dadurch gekennzeichnet**, daß der Exzenter (141) einen den Spannschaft (103) umgebenden Montageflansch (191) durchdringt.

23. Schnittstelle nach einem der vorhergehenden Ansprüche, **dadurch gekennzeichnet**, daß der Exzenter (141) einen zylindrischen Grundkörper aufweist, von dessen dem Spannbolzen (137) zugewandten Stirnfläche ein Exzenterbolzen (151) entspringt.

24. Schnittstelle nach einem der vorhergehenden Ansprüche, **dadurch gekennzeichnet**, daß der Exzenter (141) einen Exzenterbolzen (151) aufweist, der in eine quer zur Bewegungsrichtung des Spannbolzens (137) verlaufende Nut (152) in der Wandung des Spannbolzens (137) eingreift.

25. Schnittstelle nach einem der vorhergehenden Ansprüche, **dadurch gekennzeichnet**, daß die Mittelachse (143) des Exzenters (141) die Drehachse (111) der Schnittstelle (101) schneidet oder gegenüber dieser versetzt ist.

26. Schnittstelle nach einem der vorhergehenden Ansprüche, **gekennzeichnet durch** ein unmittelbar auf den Spannbolzen (221) wirkendes, diesen axial verlagerndes Betätigungsorgan (243).

27. Schnittstelle nach einem der vorhergehenden Ansprüche, **dadurch gekennzeichnet**, daß das Betätigungsorgan als im wesentlichen senkrecht auf der Mittel- und/oder Drehachse (217) des Spannbolzens (221) stehender Exzenter (243) ausgebildet ist.

28. Schnittstelle nach einem der vorhergehenden Ansprüche, **dadurch gekennzeichnet**, daß der Exzenter (243) einen Exzenterbolzen (253) aufweist, und daS zwischen dem Exzenterbolzen und dem Spannbolzen (221) ein in axialer Richtung der Schnittstelle (201) innerhalb des Spannschafts (203) verlagerbares Gleitstück (257) vorgesehen ist, das drehbar im Spannbolzen gelagert ist.

29. Schnittstelle nach einem der vorhergehenden Ansprüche, **dadurch gekennzeichnet**, daß der Spannbolzen (221) eine in seine Mantelfläche eingebrachte, den Exzenterbolzen (253) und das Gleitstück (257) aufnehmende Ausnehmung (255) aufweist, deren in axialer Richtung gemessene Ausdehnung so gewählt ist, daß der Spannbolzen von dem Exzenterbolzen und dem Gleitstück vorzugsweise spielfrei führbar ist.

30. Schnittstelle nach einem der vorhergehenden Ansprüche, **dadurch gekennzeichnet**, daß das Gleitstück (257) -in Draufsicht- etwa mondsichelförmig ausgebildet ist, indem die Außenkontur des Gleitstücks durch zwei in gleicher Richtung sich öffnende Kreisbogenabschnitte gebildet wird, wobei der erste Kreisbogenabschnitt (281) einen Öffnungswinkel von ca. 110° bis 300°, insbesondere von 180° bis 280° und vorzugsweise von 240° und einen ersten Radius (R1) aufweist, und der zweite Kreisbogenabschnitt (259) eine konkave Ausnehmung in der kreisbogenförmigen Mantelfläche des Gleitstucks bildet, und einen zweiten Radius (R2) aufweist.

31. Schnittstelle nach einem der vorhergehenden Ansprüche, **dadurch gekennzeichnet**, daß das Gleitstück (257) eine ebene Gleitfläche aufweist, die in zusammengebautem Zustand der Schnittstelle (201) auf dem eben ausgebildeten Boden der das Gleitstück und den Exzenterbolzen (253) aufnehmenden Ausnehmung (255) aufliegt.

32. Schnittstelle nach einem der vorhergehenden Ansprüche, **dadurch gekennzeichnet**, daß das Gleitstück (257) eine gewölbte Außenfläche aufweist, die vorzugsweise als Kreisbogen ausgebildet ist und deren Radius praktisch dem Radius der Mantelflache des Spannbolzens (221) entspricht.

33. Schnittstelle nach einem der vorhergehenden Ansprüche, **dadurch gekennzeichnet**, daß der Exzenterbolzen (253) einen um die Drehachse (241) des Exzenters (243) schwenkbaren Druckflächenbereich (265) aufweist, dessen Radius (R3) auf dem Radius (R2) des zweiten Kreisbogenabschnitts (259) des Gleitstucks (257) abgestimmt ist.

34. Schnittstelle nach einem der vorhergehenden Ansprüche, **dadurch gekennzeichnet**, daß die Schwenkachse (266) des Gleitstücks (257) gegenüber der Längsachse (217) des Spannbolzens ( 221) verschoben ist und diese nicht schneidet.

35. Schnittstelle nach einem der vorhergehenden Ansprüche, **dadurch gekennzeichnet**, daß die Spannelemente (69;169;269';233) so ausgebildet sind, daß auch eine radial nach außen wirkende Spannkraft aufbaubar ist.

## Claims

1. An interface between a tool carrier and a clamping shank of a machine tool holding the tool carrier, the interface having a hollow locating spigot which is provided on the tool carrier and is furnished on its inner wall with a first clamping surface, the interface having a recess which is provided at the end face of the clamping shank and receives the locating spigot and in which a clamping member displaceable in the axial direction within the clamping shank is arranged, which clamping member is furnished on its outside with a second clamping surface which cooperates with the first clamping surface via clamping elements having bearing surfaces, which clamping elements are arranged on the outside of the clamping member and are pivotable radially outwards against a resilient restoring force by means of the clamping member and are engageable with the first and second clamping surface, the clamping elements being arranged to be freely movable in the axial direction at the periphery of the clamping member, constructed as a clamping bolt (37;137;237';221), and being furnished merely in one end region (head region 69/1) with bearing surfaces which cooperate with the first clamping surface (19;119;219';215) in the locating spigot (7;107;207';267) and with the second clamping surface (71;171;271';267) of the clamping bolt, and in the event of a shifting of the clamping member in the clamping direction are pressed between the second clamping surface (71;171;271';267) and the first clamping surface (19;119;219';215), so that the two parts (3;103;203';203 and 5;105;205';205) associated with the interface (1;101;201';201) are firmly clamped to each other.

2. An interface according to Claim 1, characterised in that the clamping elements (69) are accommodated, to be movable in the axial direction, in receiving pockets (81) provided on the outside of the clamping bolt (37).

3. An interface according to Claim 1 or 2, characterised in that the receiving pockets (81) are formed by guiding elements (83) fixed to the peripheral wall of the clamping bolt (37) in the axial direction thereof, the spacing of which guiding elements measured in the peripheral direction is adapted to the width of the clamping elements (69).

4. An interface according to one of Claims 1 to 3, characterised in that at least one of the guiding elements (85,87) engages in a groove provided on the inside of the recess receiving the clamping bolt (37), so that the clamping bolt is Secured such that it is movable to and fro solely in the axial direction.

5. An interface according to one of Claims 1 to 4, characterised in that the clamping bolt (37) is shiftable in the axial direction relative to the clamping shank (3) by means of an angular drive (35,41).

6. An interface according to Claim 5, characterised in that the angular drive has a threaded sleeve (35) arranged coaxially with respect to the clamping bolt (37) and furnished with an internal thread, and a rotatable actuating member (41) cooperating with the threaded sleeve and furnished with a first toothed ring (53), and in that the clamping bolt (37) has on its outside at least one region (37/2) furnished with an external thread (40) meshable with the internal thread of the threaded sleeve (35).

7. An interface according to Claim 5 or 6, characterised in that the threaded sleeve (35) is furnished with a second toothed ring (39) cooperating with the first toothed ring (53) and is constructed to be rotatable, whereas the clamping bolt (37) is secured within the clamping shank (3) such that it is displaceable to and fro merely in the axial direction.

8. An interface according to one of Claims 5 to 7, characterised in that the actuating member (41) of the angular drive is constructed as a rotatable sleeve (41), the axis of rotation (43) of which is situated on the axis of rotation (11) of the threaded sleeve (35), and is constructed such that the first toothed ring (53) and the second toothed ring (39) mesh with each other.

9. An interface according to one of Claims 1 to 8, characterised by an abutment (55) which cooperates with the clamping elements (69) and holds the clamping elements, in the event of a movement of the clamping bolt (37) in the clamping direction, such that their ends (69/1) remote from the abutment (55) are mutually clamped, by being pressed by the second clamping surface (71) of the clamping bolt (37) against the first clamping surface (19) in the locating spigot (7).

10. An interface according to Claim 9, characterised in that the abutment (55) is formed by a shoulder which is stationary in the axial direction.

11. An interface according to Claim 10, characterised in that the shoulder is formed by a spacer disc (55) which bears on the one hand against the threaded sleeve (35) and on the other hand against a support (59).

12. An interface according to Claim 11, characterised in that the support is formed by a driving disc (59) which has at least one projection (63) engaging in a corresponding recess (65) in the tool carrier (5) or its locating spigot (7) and is rigidly connected to the clamping shank (3).

13. An interface according to one of Claims 1 to 12, characterised in that the clamping member (37) has a continuous longitudinal channel (75,77) for a coolant and/or lubricant and in that sealing means (79) are provided on its outside.

14. An interface according to one of Claims 1 to 13, characterised in that the clamping member (37) cooperates at its end face (73) with a connection piece (23) which emerges from the tool carrier (5) and via which the coolant or lubricant is conveyed.

15. An interface according to Claim 14, characterised in that the connection piece (23) is furnished with a bearing surface (27), against which the clamping bolt (37) can be moved to eject the tool carrier (5).

16. An interface according to Claim 15, characterised in that the first clamping surface (19) in the locating spigot (7) is constructed as a shoulder, running all the way round, of an annular groove (17).

17. An interface according to one of Claims 1 to 16, characterised in that the second clamping surface (71) on the clamping shank (3) [sic] is constructed as a surface, running all the way round, of an annular shoulder.

18. An interface according to one of Claims 1 to 17, characterised in that the clamping surfaces (19,71) include an angle of 90° to 5°, preferably of 60° to 30°, in particular of about 45°, with the longitudinal axis or axis of rotation (11) of the tool carrier (5) and of the clamping shank (3).

19. An interface according to one of the preceding claims, characterised by an actuating member (141) acting directly on the clamping bolt (137) and shifting the latter axially.

20. An interface according to one of the preceding claims, characterised in that the actuating member is constructed as an eccentric (141) situated substantially perpendicularly on the centre axis and/or axis of rotation (111) of the clamping bolt (137).

21. An interface according to one of the preceding claims, characterised in that the eccentric (141) is rotatably mounted in the wall of the clamping shank (103).

22. An interface according to one of the preceding claims, characterised in that the eccentric (141) penetrates a mounting flange (191) surrounding the clamping shank (103).

23. An interface according to one of the preceding claims, characterised in that the eccentric (141) has a cylindrical body, from the end of which, facing the clamping bolt (137), an eccentric pin (151) emerges.

24. An interface according to one of the preceding claims, characterised in that the eccentric (141) has an eccentric bolt (151) which engages in groove (152) in the wall of the clamping bolt (137), which groove runs transversely to the direction of movement of the clamping bolt (137).

25. An interface according to one of the preceding claims, characterised in that the centre axis (143) of the eccentric (141) intersects the axis of rotation (111) of the interface (101) or is offset relative thereto.

26. An interface according to one of the preceding claims, characterised by an actuating member (243) acting directly on the clamping bolt (221) and shifting the latter axially.

27. An interface according to one of the preceding claims, characterised in that the actuating member is constructed as an eccentric (243) situated substantially perpendicularly on the centre axis and/or axis of rotation (217) of the clamping bolt (221).

28. An interface according to one of the preceding claims, characterised in that the eccentric (243) has an eccentric bolt (253), and in that a sliding piece (257) is provided between the eccentric bolt and the clamping bolt (221), and is shiftable within the clamping shank (203) in the axial direction of the interface (201) and is rotatably mounted in the clamping bolt.

29. An interface according to one of the preceding claims, characterised in that the clamping bolt (221) has a recess (255) in the circumferential surface thereof receiving the eccentric bolt (253) and the sliding piece (257), and the extent of the recess measured in the axial direction is chosen such that the clamping bolt can preferably be guided by the eccentric bolt and the sliding piece in a manner free from play.

30. An interface according to one of the preceding claims, characterised in that the sliding piece (257) - in plan view - is configured approximately in the shape of a crescent moon by the outer contour of the sliding piece being formed by two circular-arc segments opening in the same direction, the first circular-arc segment (281) having an opening angle of about 110° to 300°, in particular of 180° to 280° and preferably of 240°, and a first radius (R1), and the second circular-arc segment (259) forming a concave recess in the circular-arc-shaped circumferential surface of the sliding piece, and having a second radius (R2).

31. An interface according to one of the preceding claims, characterised in that the sliding piece (257) has a plane sliding surface which, in the assembled state of the interface (201), rests on the plane-configured base of the recess (255) receiving the sliding piece and the eccentric bolt (253).

32. An interface according to one of the preceding claims, characterised in that the sliding piece (257) has a curved outer surface which is preferably configured as a circular arc and the radius of which corresponds substantially to the radius of the circumferential surface of the clamping bolt (221).

33. An interface according to one of the preceding claims, characterised in that the eccentric bolt (253) has a pressure surface region (265) which is pivotable about the axis of rotation (241) of the eccentric (243) and the radius (R3) of which is matched to the radius (R2) of the second circular-arc segment (259) of the sliding piece (257).

34. An interface according to one of the preceding claims, characterised in that the pivot axis (266) of the sliding piece (257) is displaced relative to the longitudinal axis (217) of the clamping bolt (221) and does not intersect the said longitudinal axis.

35. An interface according to one of the preceding claims, characterised in that the clamping elements (69;169;269';233) are constructed such that a clamping force acting radially outwards can also be built up.

## Revendications

1. Accouplement entre un porte-outil et un corps de serrage d'une machine-outil qui maintient le porte-outil, avec un tenon d'ajustement creux, prévu sur le porte-outil et pourvu sur sa paroi intérieure d'une première face de serrage, avec un évidement prévu sur le côté frontal du corps de serrage et recevant le tenon d'ajustement, évidement dans lequel est disposé un organe de serrage, qui peut être déplacé en direction axiale à l'intérieur du corps de serrage et qui est pourvu sur son côté extérieur d'une deuxième face de serrage, qui coopère avec la première face de serrage par l'intermédiaire d'éléments de serrage qui présentent des faces d'application, qui sont disposés sur le côté extérieur de l'organe de serrage et qui, a l'encontre d'une force de rappel élastique, peuvent être pivotés radialement vers l'extérieur par l'organe de serrage et amenés en engagement avec la première face de serrage et la deuxième face de serrage, les éléments de serrage étant disposés à libre déplacement en direction axiale sur la périphérie de l'organe de serrage réalisé sous forme de boulon de serrage (37; 137; 237'; 221) et étant pourvus seulement dans une région terminale (région de tête 69/1) de faces d'application qui coopèrent avec la première face de serrage (19 ; 119 ; 219' ; 215) dans le tenon d'ajustement (7 ; 107 ; 207' ; 267) et avec la deuxième face de serrage (71 ; 171 ; 271' ; 267) du boulon de serrage, et ces éléments étant, lors d'un déplacement de l'organe de serrage dans la direction de serrage, pressés entre la deuxième face de serrage (71 ; 171 ; 271' ; 267) et la première face de serrage (19 ; 119 ; 219' ; 215) de telle sorte que les deux parties (3 ; 103 ; 203' ; 203 et 5 ; 105 ; 205' ; 205) concernées par l'accouplement (1 ; 101 ; 201' ; 201) sont mutuellement assemblées fixement avec serrage.

2. Accouplement selon la revendication 1, **caractérisé** en ce que les éléments de serrage (69) sont logés, avec possibilité de déplacement en direction axiale, dans des poches réceptrices (81) prévues sur le côté extérieur du boulon de serrage (37).

3. Accouplement selon la revendication 1 ou 2, **caractérisé** en ce que les poches réceptrices (81) sont formées par des éléments de guidage (83) fixés sur la paroi périphérique du boulon de serrage (37) dans la direction axiale de ce dernier, éléments dont la distance, mesurée en direction circonférentielle, est adaptée à la largeur des éléments de serrage (69).

4. Accouplement selon une des revendications 1 à 3, **caractérisé** en ce qu'au moins un des éléments de guidage (85, 87) s'engage dans une rainure prévue sur le côté intérieur de l'évidement recevant le boulon de serrage (37), de sorte que le boulon de serrage est fixé en position de telle sorte qu'il peut être exclusivement déplacé en va-et-vient en direction axiale.

5. Accouplement selon une des revendications 1 à 4, **caractérisé** en ce que le boulon de serrage (37) peut être déplacé en direction axiale par rapport au corps de serrage (3) au moyen d'une commande par engrenage d'angle (35, 41).

6. Accouplement selon la revendication 5, **caractérisé** en ce que la commande par engrenage d'angle comprend une douille filetée (35) disposée coaxialement au boulon de serrage (37) et pourvue d'un filetage intérieur, ainsi qu'un organe d'actionnement rotatif (41) qui coopère avec la douille filetée et est pourvu d'une première couronne dentée (53), et en ce que le boulon de serrage (37) présente, sur son côté extérieur, au moins une région (37/2) qui est pourvue d'un filetage extérieur (40) qui peut être amené en engagement avec le filetage intérieur de la douille filetée (35).

7. Accouplement selon la revendication 5 ou 6, **caractérisé** en ce que la douille filetée (35) est pourvue d'une deuxième couronne dentée (39) coopérant avec la première couronne dentée (53) et est réalisée rotative, tandis que le boulon de serrage (37) est fixé en position à l'intérieur du corps de serrage (3) de telle sorte qu'il peut être uniquement déplacé en va-et-vient en direction axiale.

8. Accouplement selon une des revendications 5 à 7, **caractérisé** en ce que l'organe d'actionnement (41) de la commande par engrenage d'angle est réalisé sous la forme d'une douille rotative (41) dont l'axe de rotation (43) est perpendiculaire à l'axe de rotation (11) de la douille filetée (35), et est conçu de telle sorte que la première couronne dentée (53) et la deuxième couronne dentée (39) s'engagent l'une dans l'autre.

9. Accouplement selon une des revendications 1 à 8, **caractérisé** par un élément de contre-appui (55) qui coopère avec les éléments de serrage (69) et, lors d'un déplacement du boulon de serrage (37) dans la direction de serrage, maintient les éléments de serrage de telle sorte que leurs extrémités (69/1) opposées à l'élément de contre-appui (55) sont bloquées en étant pressées par la deuxième face de serrage (71) du boulon de serrage (37) contre la première face de serrage (19) prévue dans le tenon d'ajustement (7).

10. Accouplement selon la revendication 9, **caractérisé** en ce que l'élément de contre-appui (55) est formé par un épaulement stationnaire en direction axiale.

11. Accouplement selon la revendication 10, **caractérisé** en ce que l'épaulement est formé par une bague d'écartement (55) qui s'applique d'un côté contre la douille filetée (35), et de l'autre côté contre un support (59).

12. Accouplement selon la revendication 11, **caractérisé** en ce que le support est formé par un plateau entraîneur (59), qui présente au moins une partie saillante (63) s'engageant dans un évidement correspondant (65) prévu dans le porte-outil (5) ou dans son tenon d'ajustement (7), et qui est rigidement assemblé au corps de serrage (3).

13. Accouplement selon une des revendications 1 à 12, **caractérisé** en ce que l'organe de serrage (37) présente un canal longitudinal débouchant (75, 77) pour un réfrigérant et/ou lubrifiant, et en ce que des moyens d'étanchéité (79) sont prévus sur son côté extérieur.

14. Accouplement selon une des revendications 1 à 13, **caractérisé** en ce que l'organe de serrage (37) coopère, sur son côté frontal (73), avec un piquage (23) qui provient du porte-outil (5) et par l'intermédiaire duquel est transmis le réfrigérant ou lubrifiant.

15. Accouplement selon la revendication 14, **caractérisé** en ce que le piquage (23) est pourvu d'une face de butée (27) contre laquelle le boulon de serrage (37) peut être déplacé en vue de l'éjection du porte-outil (5).

16. Accouplement selon la revendication 15, **caractérisé** en ce que la première face de serrage (19), prévue dans le tenon d'ajustement (7), est réalisée sous la forme d'un épaulement entourant une rainure annulaire (17).

17. Accouplement selon une des revendications 1 à 16, **caractérisé** en ce que la deuxième face de serrage (71), prévue sur le corps de serrage (3), est conçue comme face entourante d'un épaulement annulaire.

18. Accouplement selon une des revendications 1 à 17, **caractérisé** en ce que les faces de serrage (19, 71) forment, avec l'axe longitudinal ou axe de rotation (11) du porte-outil (5) et du corps de serrage (3), un angle allant de 90° à 5°, de préférence de 60° à 30°, notamment égal à environ 45°.

19. Accouplement selon une des revendications précédentes, **caractérisé** par un organe d'actionnement (141) agissant directement sur le boulon de serrage (137) pour le déplacer axialement.

20. Accouplement selon une des revendications précédentes, **caractérisé** en ce que l'organe d'actionnement est réalisé sous la forme d'un excentrique (141) disposé sensiblement perpendiculairement à l'axe médian et/ou de rotation (111) du boulon de serrage (137).

21. Accouplement selon une des revendications précédentes, **caractérisé** en ce que l'excentrique (141) est monté à rotation dans la paroi du corps de serrage (103).

22. Accouplement selon une des revendications précédentes, **caractérisé** en ce que l'excentrique (141) traverse une bride de montage (191) entourant le corps de serrage (103).

23. Accouplement selon une des revendications précédentes, **caractérisé** en ce que l'excentrique (141) présente un corps de base cylindrique, de la face frontale duquel qui est tournée vers le boulon de serrage (137) est issu un boulon d'excentrique (151).

24. Accouplement selon une des revendications précédentes, **caractérisé** en ce que l'excentrique (141) présente un boulon d'excentrique (151) qui s'engage dans une rainure (152) pratiquée dans la paroi du boulon de serrage (137) et s'étendant transversalement à la direction de déplacement du boulon de serrage (137).

25. Accouplement selon une des revendications précédentes, **caractérisé** en ce que l'axe médian (143) de l'excentrique (141) coupe l'axe de rotation (111) de l'accouplement (101) ou est décalé par rapport à ce dernier.

26. Accouplement selon une des revendications précédentes, **caractérisé** par un organe d'actionnement (243) agissant directement sur le boulon de serrage (221) pour le déplacer axialement.

27. Accouplement selon une des revendications précédentes, **caractérisé** en ce que l'organe d'actionnement est réalisé sous la forme d'un excentrique (243) disposé sensiblement perpendiculairement à l'axe médian et/ou de rotation (217) du boulon de serrage (221).

28. Accouplement selon une des revendications précédentes, **caractérisé** en ce que l'excentrique (243) présente un boulon d'excentrique (253), et en ce qu'est prévu, entre le boulon d'excentrique et le boulon de serrage (221), un coulisseau (257), qui peut être déplacé à l'intérieur du corps de serrage (203) dans la direction axiale de l'accouplement (201) et qui est monté à rotation dans le boulon de serrage.

29. Accouplement selon une des revendications précédentes, **caractérisé** en ce que le boulon de serrage (221) présente un évidement (255), pratiqué dans sa face d'enveloppe et recevant le boulon d'excentrique (253) et le coulisseau (257), évidement dont l'étendue, mesurée en direction axiale, est choisie de telle sorte que le boulon de serrage peut être guidé de préférence sans jeu par le boulon d'excentrique et le coulisseau.

30. Accouplement selon une des revendications précédentes, **caractérisé** en ce que le coulisseau (257) est réalisé, en vue de dessus, approximativement en forme de croissant de lune, par le fait que le contour extérieur du coulisseau est formé par deux segments d'arc de cercle s'ouvrant dans la même direction, le premier segment d'arc de cercle (281) présentant un angle d'ouverture d'environ 110° à 300°, notamment de 180° à 280° et de préférence de 240°, et un premier rayon (R1), et le deuxième segment d'arc de cercle (259) formant un évidement concave dans la face d'enveloppe en arc de cercle du coulisseau et présentant un deuxième rayon (R2).

31. Accouplement selon une des revendications précédentes, **caractérisé** en ce que le coulisseau (257) présente une face de coulissement plane qui, à l'état assemblé de l'accouplement (201), repose sur le fond de configuration plane de l'évidement (255) recevant le coulisseau et le boulon d'excentrique (253).

32. Accouplement selon une des revendications précédentes, **caractérisé** en ce que le coulisseau (257) présente une face extérieure cintrée, qui est de préférence confgurée en arc de cercle et dont le rayon correspond pratiquement au rayon de la face d'enveloppe du boulon de serrage (221).

33. Accouplement selon une des revendications précédentes, **caractérisé** en ce que le boulon d'excentrique (253) présente une région de face de pression (265) qui peut pivoter autour de l'axe de rotation (241) de l'excentrique (243) et dont le rayon (R3) est adapté au rayon (R2) du deuxième segment d'arc de cercle (259) du coulisseau (257).

34. Accouplement selon une des revendications précédentes, **caractérisé** en ce que l'axe de pivotement (266) du coulisseau (257) est décalé par rapport à l'axe longitudinal (217) du boulon de serrage (221) et ne coupe pas cet axe.

35. Accouplement selon une des revendications précédentes, **caractérisé** en ce que les éléments de serrage (69; 169; 269'; 233) sont conçus de telle sorte qu'on peut aussi établir une force de serrage agissant radialement vers l'extérieur.
